# EUROPEAN PATENT SPECIFICATION

(11) **EP 3 282 589 B1**
(45) Date of publication and mention of the grant of the patent: **05.10.2022**
(21) Application number: 16184130.9
(22) Date of filing: 13.08.2016
(51) Int. Cl.: H04B 1/28

(54) **SIGNAL RECEIVER**
SIGNALEMPFÄNGER
RÉCEPTEUR DE SIGNAUX

(43) Date of publication of application: 14.02.2018
(73) Proprietor: Rafael Microelectronics, Inc., Hsinchu County 30264 (TW)
(72) Inventor: Kan, Meng-Ping, Hsinchu City 300 (TW)
(74) Representative: Lang, Christian

(56) References cited:
- EP-A1- 1 659 685
- EP-A2- 1 819 061
- US-A1- 2016 036 400

## Description

### BACKGROUND OF THE DISCLOSURE

### Field of the Disclosure

The present invention relates generally to a signal receiver, and more particularly to a signal receiver configured to be set in an outdoor unit to receive a signal from one or more satellites in a field of view of the signal receiver.

### Brief Description of the Related Art

Satellite television has become increasingly popular due to various contents. A satellite television system typically includes an antenna array configured to collect signals from satellites and a signal receiver containing amplifiers configured to amplify the collected signals, band-pass filters (BPF) configured to pass the collected signals at frequencies within a certain frequency range and to attenuate the collected signals at frequencies outside the frequency range, and mixers configured to convert the collected signals at radio frequencies into ones at intermediate frequencies. Thereby, the collected signals may be processed into optimum amplified signals in a base or intermediate frequency band so as to be demodulated in a set top box.

European patent applications EP 1819061 A2 and EP 1659685 A1 describe frequency converters for signal receivers with the components of the same being arranged on a circuit board. From US patent application US 2016/0036400 A1 a signal receiver is known that comprises an integrated-circuit chip with two amplifiers and two switch circuits. The remaining components are together with the integrated-circuit chip arranged on a circuit board.

### SUMMARY OF THE DISCLOSURE

The present invention provides a signal receiver configured to be set in an outdoor unit to receive a signal from one or more satellites in a field of view of the signal receiver such that the signal can be conditioned and split in the outdoor unit to be passed to multiple indoor units in respective families, and each of the indoor units may include a splitter to split the signal received from the signal receiver set in the outdoor unit to be demodulated by multiple setup boxes in said each of the indoor units.

The signal receiver according to the invention has the features of claim 1. Further embodiments are subject-matter of the dependent claims. The signal receiver includes a first synthesizer configured to generate an oscillating output; a first mixer configured to mix its first input with its second input associated with the oscillating output of the first synthesizer into an output; a first splitter configured to split its input associated with the output of the first mixer into a first output and a second output; a first switch matrix configured to switch its first input associated with the first output of the first splitter into a first output; a second switch matrix configured to switch its first input associated with the second output of the first splitter into a first output; a second synthesizer configured to generate an oscillating output; a second mixer configured to mix its first input associated with the first output of the first switch matrix with its second input associated with the oscillating output of the second synthesizer into an output; a third synthesizer configured to generate an oscillating output; and a third mixer configured to mix its first input associated with the first output of the second switch matrix with its second input associated with the oscillating output of the third synthesizer into an output. Said first switch matrix, second synthesizer and second mixer are incorporated in a first single integrated-circuit (IC) chip, and said second switch matrix, third synthesizer and third mixer are incorporated in a second single integrated-circuit (IC) chip.

A single integrated-circuit (IC) chip according to the invention has the features of claim 14. Further embodiments are subject-matter of the dependent claims. The single integrated-circuit (IC) chip includes a switch matrix configured to switch its first input into a first output and switch its second input into a second output; a first synthesizer configured to generate an oscillating output; a first mixer configured to mix its first input associated with the first output of the switch matrix with its second input associated with the oscillating output of the first synthesizer into an output; a second synthesizer configured to generate an oscillating output; a second mixer configured to mix its first input associated with the second output of the switch matrix with its second input associated with the oscillating output of the second synthesizer into an output; a first filter configured to suppress a component of its input associated with the output of the first mixer into an output; a second filter configured to suppress a component of its input associated with the output of the second mixer into an output; a third synthesizer configured to generate an oscillating output; a third mixer configured to mix its first input associated with the output of the first filter with its second input associated with the oscillating output of the third synthesizer into an output; a fourth synthesizer configured to generate an oscillating output; a fourth mixer configured to mix its first input associated with the output of the second filter with its second input associated with the oscillating output of the fourth synthesizer into an output; and a combiner configured to combine its first input associated with the output of the third mixer and its second input associated with the output of the fourth mixer into an output. Said switch matrix, first, second, third and fourth synthesizers, first, second, third and fourth mixers, first and second filters and combiner are incorporated in said single integrated-circuit (IC) chip.

These, as well as other components, steps, features, benefits, and advantages of the present disclosure, will now become clear from a review of the following detailed description of illustrative embodiments, the accompanying drawings, and the claims.

### BRIEF DESCRIPTION OF THE DRAWINGS

The drawings disclose illustrative embodiments of the present disclosure. Details that may be apparent or unnecessary may be omitted to save space or for more effective illustration. When the same reference number or reference indicator appears in different drawings, it may refer to the same or like components or steps.

Aspects of the disclosure may be more fully understood from the following description when read together with the accompanying drawings, which are to be regarded as illustrative in nature, and not as limiting. The drawings are not necessarily to scale, emphasis instead being placed on the principles of the disclosure. In the drawings:
Fig. 1A illustrates a block diagram of a signal receiver;
Figs. 1B and 1C are block diagrams illustrating two different types of single integrated-circuit (IC) chips;
Fig. 2 illustrates packages for two single integrated-circuit (IC) chips;
Fig. 3 illustrates a block diagram of a signal receiver;
Fig. 4 illustrates a block diagram of a signal receiver set in an outdoor unit to work with multiple indoor units;
Fig. 5 illustrates a block diagram of a signal receiver;
Fig. 6 illustrates a block diagram of a signal receiver;
Fig. 7 illustrates a block diagram of a signal receiver;
Fig. 8 illustrates a block diagram of a signal receiver set in an outdoor unit to work with multiple indoor units; and
Fig. 9 illustrates a block diagram of a signal receiver.

Certain examples useful to understand the present invention are depicted in the drawings.

### DETAILED DESCRIPTION OF THE INVENTION

Illustrative examples are now described. Other examples may be used in addition or instead. Details that may be apparent or unnecessary may be omitted to save space or for a more effective presentation. Conversely, some examples may be practiced without all of the details that are disclosed.

### First example

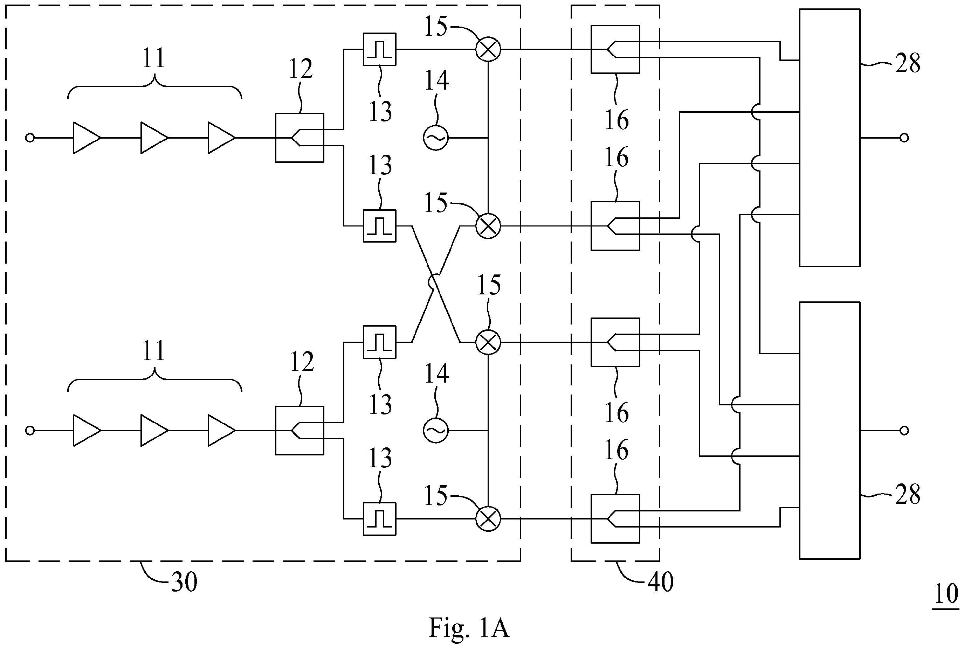

Fig. 1A illustrates a block diagram of a signal receiver in accordance with a first example. Referring to Fig. 1A, the signal receiver 10, such as lownoise block (LNB), is configured to be set in an outdoor unit to process vertically and horizontally polarized signals or right-hand and left-hand circularly polarized signals, collected by an antenna feed horn of the signal receiver 10 at a focal point of an antenna dish or reflector dish of the outdoor unit, from a satellite in a field of view of the signal receiver 10.

Referring to Fig. 1A, the signal receiver 10 may include two sets of multi-stage amplifiers 11 arranged in parallel, wherein each of the two sets of multi-stage amplifiers 11 includes multiple amplifiers coupled in series. Each of the amplifiers 11 in each set may be a low noise amplifier (LNA), for example, having its input to be amplified as an output of said each of the amplifiers 11. Accordingly, each of the two sets of multi-stage amplifiers 11 may have its input to be amplified stage by stage as an output of said each of the two sets of multi-stage amplifiers 11, and thus said each of the two sets of multi-stage amplifiers 11 has its output amplified with a low noise. The vertically polarized signal collected from the antenna feed horn may be transmitted to the input of a top one of the two sets of multi-stage amplifiers 11, and the horizontally polarized signal collected from the antenna feed horn may be transmitted to the input of a bottom one of the two sets of multi-stage amplifiers 11; alternatively, the right-hand circularly polarized signal collected from the antenna feed horn may be transmitted to the input of the top one of the two sets of multi-stage amplifiers 11, and the left-hand circularly polarized signal collected from the antenna feed horn may be transmitted to the input of the bottom one of the two sets of multi-stage amplifiers 11. The two sets of multi-stage amplifiers 11 may be two respective sets of three-stage amplifiers arranged in parallel, wherein each of the two sets of three-stage amplifiers includes three amplifiers coupled in series as shown in Fig. 1A. Alternatively, the two sets of multi-stage amplifiers 11 may be two respective sets of two-stage amplifiers arranged in parallel, wherein each of the two sets of two-stage amplifiers includes two amplifiers coupled in series. Alternatively, the two sets of multi-stage amplifiers 11 may be replaced with two respective sets of single-stage amplifier arranged in parallel.

Referring to Fig. 1A, the signal receiver 10 may include two splitters 12, i.e. power divider, arranged in parallel, wherein a top one of the two splitters 12 has its input coupled to the output of the top one of the two sets of multi-stage amplifiers 11 and a bottom one of the two splitters 12 has its input coupled to the output of the bottom one of the two sets of multi-stage amplifiers 11. Each of the two splitters 12 may split its input into two identities with substantially the same power at two respective outputs of said each of the splitters 12.

Referring to Fig. 1A, the signal receiver 10 may include four band-pass filters (BPF) 13 arranged in parallel, wherein top two of the four band-pass filters (BPF) 13 have their inputs coupled to the two respective outputs of the top one of the two splitters 12, and bottom two of the four band-pass filters (BPF) 13 have their inputs coupled to the two respective outputs of the bottom one of the two splitters 12. Each of the four band-pass filters (BPF) 13 may pass its input at frequencies within a certain frequency range and attenuate its input at frequencies outside the frequency range as an output of said each of the band-pass filters (BPF) 13.

Referring to Fig. 1A, the signal receiver 10 may include two synthesizers 14, i.e., local oscillators (LO), a top one of which may generate an oscillating output within a frequency range between 3.0 GHz and 20.0 GHz and preferably between 8.0 GHz and 12.0 GHz, such as 9.75 GHz and a bottom one of which may generate an oscillating output within a frequency range between 3.0 GHz and 20.0 GHz and preferably between 8.0 GHz and 12.0 GHz, such as 10.6 GHz. The oscillating output of the top one of the two synthesizers 14 may have a different frequency from that of the oscillating output of the bottom one of the two synthesizers 14.

Referring to Fig. 1A, the signal receiver 10 may include four mixers 15 arranged in parallel. A topmost one of the four mixers 15 may have its first input coupled to the output of a top one of the top two of the four band-pass filters (BPF) 13 and its second input coupled to the oscillating output of the top one of the two synthesizers 14 and mix its first and second inputs into an output. A second top one of the four mixers 15 may have its first input coupled to the output of a top one of the bottom two of the four band-pass filters (BPF) 13 and its second input coupled to the oscillating output of the top one of the two synthesizers 14 and mix its first and second inputs into an output. A second bottom one of the four mixers 15 may have its first input coupled to the output of a bottom one of the top two of the four band-pass filters (BPF) 13 and its second input coupled to the oscillating output of the bottom one of the two synthesizers 14 and mix its first and second inputs into an output. A bottommost one of the four mixers 15 may have its first input coupled to the output of a bottom one of the bottom two of the four band-pass filters (BPF) 13 and its second input coupled to the oscillating output of the bottom one of the two synthesizers 14 and mix its first and second inputs into an output. The two sets of multi-stage amplifiers 11, the two splitters 12, the four band-pass filters (BPF) 13, the two synthesizers 14 and the four mixers 15 may compose a radio-frequency (RF) module 30.

Referring to Fig. 1A, the signal receiver 10 may include a splitter matrix 40 having four splitters 16, i.e. power divider, arranged in parallel, wherein a topmost one of the four splitters 16 may have its input coupled to the output of the topmost one of the mixers 15, a second top one of the four splitters 16 may have its input coupled to the output of the second top one of the mixers 15, a second bottom one of the four splitters 16 may have its input coupled to the output of the second bottom one of the mixers 15 and a bottommost one of the four splitters 16 may have its input coupled to the output of the bottommost one of the mixers 15. Each of the four splitters 16 may split its input into two identities with substantially the same power at two respective outputs of said each of the splitters 16.

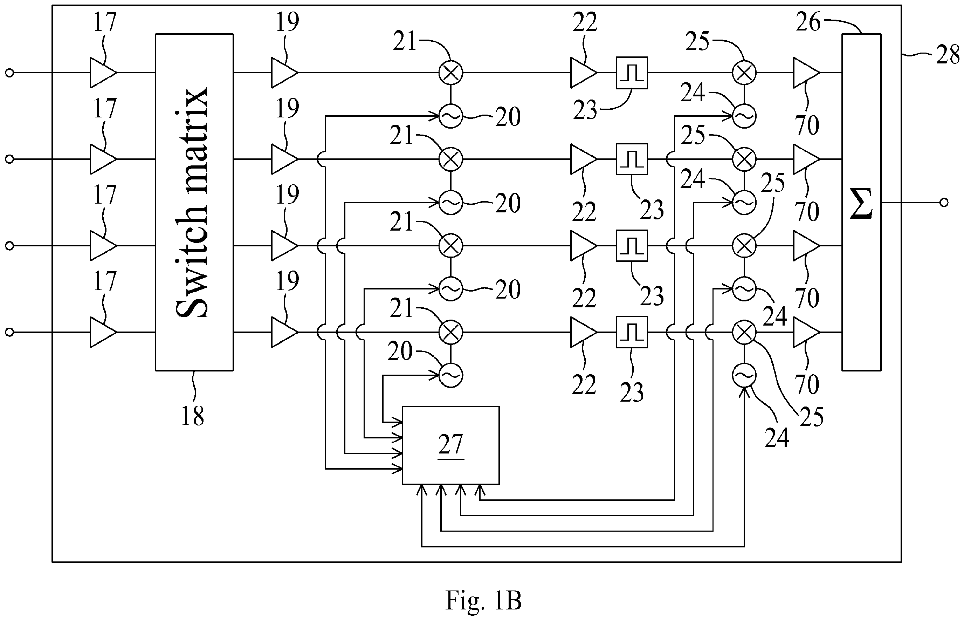

Fig. IB is a block diagram illustrating a type of single integrated-circuit (IC) chip in accordance with a first example. Referring to Figs. 1A and 1B, the signal receiver 10 may include a first combination of two single integrated-circuit (IC) chips 28 having the same circuit scheme. Referring to Fig. 1B, each of the two single integrated-circuit (IC) chips 28 has a set of four amplifiers 17, such as single-ended-to-differential amplifiers, arranged in parallel. A topmost one of the four amplifiers 17 in each of the two single integrated-circuit (IC) chips 28 may have a single-ended input coupled to one of the outputs of a topmost one of the splitters 16. A second top one of the four amplifiers 17 in each of the two single integrated-circuit (IC) chips 28 may have a single-ended input coupled to one of the outputs of a second top one of the splitters 16. A second bottom one of the four amplifiers 17 in each of the two single integrated-circuit (IC) chips 28 may have a single-ended input coupled to one of the outputs of a second bottom one of the splitters 16. A bottommost one of the four amplifiers 17 in each of the two single integrated-circuit (IC) chips 28 may have a single-ended input coupled to one of the outputs of a bottommost one of the splitters 16. Each of the eight amplifiers 17 may amplify its single-ended input into its differential output with a phase difference of substantially 180 degrees.

Referring to Figs. 1A and 1B, each of the two single integrated-circuit (IC) chips 28 may include a switch matrix 18 having four differential inputs each coupled to the differential output of one of the four amplifiers 17 in said each of the two single integrated-circuit (IC) chips 28. The switch matrix 18 may be controlled to switch one of its four differential inputs each having a phase difference of substantially 180 degrees to one of its four differential outputs each having a phase difference of substantially 180 degrees.

Referring to Figs. 1A and 1B, each of the two single integrated-circuit (IC) chips 28 may include a set of four amplifiers 19, such as differential-to-differential amplifiers, arranged in parallel. In each of the two single integrated-circuit (IC) chips 28, each of the four amplifiers 19 may have a differential input coupled to one of the four differential outputs of the switch matrix 18. Each of the amplifiers 19 may amplify its differential input having a phase difference of substantially 180 degrees into its differential output.

Referring to Figs. 1A and 1B, each of the two single integrated-circuit (IC) chips 28 may include a set of four synthesizers 20, i.e., local oscillators (LO), each having an oscillating output and a set of four mixers 21 arranged in parallel. In each of the two single integrated-circuit (IC) chips 28, each of the four mixers 21 may have its first input, such as differential input, coupled to the differential output of one of the four amplifiers 19 and its second input coupled to the oscillating output of one of the four synthesizers 20 and mix its first and second inputs into an output such as differential output.

Referring to Figs. 1A and 1B, each of the two single integrated-circuit (IC) chips 28 may include a set of four amplifiers 22, such as differential-to-differential amplifiers, arranged in parallel. In said each of the two single integrated-circuit (IC) chips 28, each of the four amplifiers 22 may have a differential input coupled to the differential output of one of the mixers 21. Each of the amplifiers 22 may amplify its differential input into a differential output.

Referring to Figs. 1A and 1B, each of the two single integrated-circuit (IC) chips 28 may include a set of four image rejection filters 23 arranged in parallel. In each of the two single integrated-circuit (IC) chips 28, each of the four image rejection filters 23 may have differential input coupled to the differential output of one of the amplifiers 22. Each of the image rejection filters 23 may suppress image components of its differential input into a differential output.

Referring to Figs. 1A and 1B, each of the two single integrated-circuit (IC) chips 28 may include a set of four synthesizers 24, i.e., local oscillators (LO), each having an oscillating output and a set of four mixers 25 arranged in parallel. In each of the two single integrated-circuit (IC) chips 28, each of the four mixers 25 may have its first input, such as differential input, coupled to the differential output of one of the four image rejection filters 23 and its second input coupled to the oscillating output of one of the four synthesizers 24 and mix its first and second inputs into a differential output.

Referring to Figs. 1A and 1B, each of the two single integrated-circuit (IC) chips 28 may include a set of four amplifiers 70, such as differential-to-single-ended amplifiers, arranged in parallel. In each of the two single integrated-circuit (IC) chips 28, each of the four amplifiers 70 may have a differential input coupled to one of the four differential outputs of the mixers 25. Each of the amplifiers 70 may amplify its differential input having a phase difference of substantially 180 degrees into a single-ended output and have an optimum IdB compression point (P1dB) to prevent electronic devices downstream of said each of the amplifiers 70 from being burned out when an excessive power flows through said each of the amplifiers 70.

Referring to Figs. 1A and 1B, each of the two single integrated-circuit (IC) chips 28 may include an optimization unit 27 coupled to the synthesizers 20 and 24 in said each of the two single integrated-circuit (IC) chips 28. The optimization unit 27 in each of the two single integrated-circuit (IC) chips 28 may compare the frequencies of each two of the oscillating outputs of the eight synthesizers 20 and 24 so as to generate a comparison result. In said each of the two single integrated-circuit (IC) chips 28, when the optimization unit 27 determines the oscillating outputs of two of the eight synthesizers 20 and 24 have an identical frequency or similar frequencies with a difference in a specific range of less than 0.5 MHz and preferably less than 0.25 MHz, for example, in accordance with the comparison result, the optimization unit 27 may adjust a first one of said two of the eight synthesizers 20 and 24 to shift a frequency of its oscillating output with a first certain frequency and adjust a second one of the synthesizers 20 and 24, having its oscillating output mixed into the same signal path as the oscillating output of the first one of said two of the synthesizers 20 and 24 is mixed, to shift a frequency of its oscillating output with a second certain frequency such that the frequencies of the oscillating outputs of each two of the synthesizers 20 and 24 may be adjusted to be different from each other. The first and second certain frequencies may have substantially the same levels in the opposite directions. For example in one of the two single integrated-circuit (IC) chips 28, when the oscillating output of a topmost one of the synthesizers 20 is adjusted by the optimization unit 27 to be shifted with a frequency of +1.0 MHz, a topmost one of the synthesizers 24 may be adjusted by the optimization units 27 to be shifted with a frequency of -1.0 MHz.

Referring to Figs. 1A and 1B, each of the two single integrated-circuit (IC) chips 28 may include a combiner 26 having its four inputs each coupled to the single-ended output of one of the four amplifiers 70 in said each of the two single integrated-circuit (IC) chips 28 and combine its four inputs into an output.

Accordingly, referring to Figs. 1A and 1B, the set of four amplifiers 17, the switch matrix 18, the set of four amplifiers 19, the set of four synthesizers 20, the set of four mixers 21, the set of four amplifiers 22, the set of four image rejection filters 23, the set of four synthesizers 24, the set of four mixers 25, the set of four amplifiers 70, the combiner 26 and the optimization unit 27 may be incorporated in the single integrated-circuit (IC) chip 28.

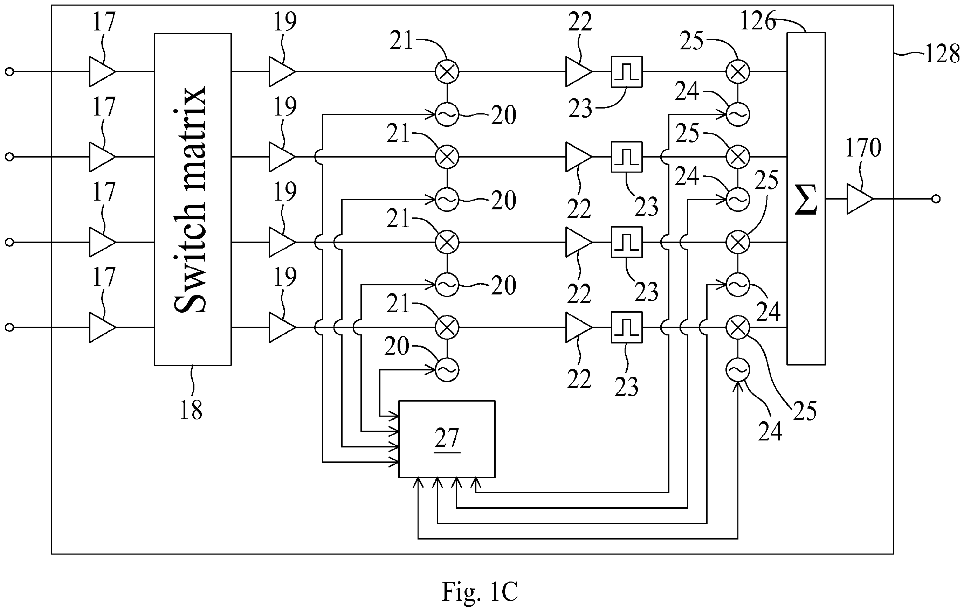

Alternatively, Fig. 1C is a block diagram illustrating another type of single integrated-circuit (IC) chip. Referring to Figs. 1A and 1C, the signal receiver 10 may include a second combination of two single integrated-circuit (IC) chips 128 having the same circuit scheme. The single integrated-circuit (IC) chip 128 is similar to the single integrated-circuit (IC) chip 28 as illustrated in Fig. IB except for the following description. The same reference number illustrated in Figs. 1B and 1C indicates elements having the same functions. Referring to Fig. 1C, each of the two single integrated-circuit (IC) chips 128 may include a combiner 126 having its four differential inputs each coupled to one of the four differential outputs of the mixers 25 in said each of the two single integrated-circuit (IC) chips 128 and combine its four differential inputs into a differential output.

Referring to Fig. 1C, each of the two single integrated-circuit (IC) chips 128 may include an amplifier 170, such as differential-to-single-ended amplifier. In each of the two single integrated-circuit (IC) chips 128, the amplifier 170 may have a differential input coupled to the differential output of the combiner 126. Each of the amplifiers 170 may amplify its differential input having a phase difference of substantially 180 degrees into a single-ended output and have an optimum IdB compression point (P1dB) to prevent electronic devices downstream of said each of the amplifiers 170 from being burned out when an excessive power flows through said each of the amplifiers 170.

Accordingly, referring to Fig. 1C, the set of four amplifiers 17, the switch matrix 18, the set of four amplifiers 19, the set of four synthesizers 20, the set of four mixers 21, the set of four amplifiers 22, the set of four image rejection filters 23, the set of four synthesizers 24, the set of four mixers 25, the optimization unit 27, the combiner 126 and the amplifier 170,may be incorporated in the single integrated-circuit (IC) chip 128.

Alternatively, referring to Figs. 1A, 1B and 1C, the signal receiver 10 may include a third combination of the two single integrated-circuit (IC) chips 28 and 128 having different circuit schemes. For example, the single integrated-circuit (IC) chip 28 as seen in Fig. IB may include the set of four amplifiers 17 each having its input coupled to a top one of the two outputs of one of the four splitters 16, and the single integrated-circuit (IC) chip 128 as seen in Fig. 1C may include the set of four amplifiers 17 each having its input coupled to a bottom one of the two outputs of one of the splitters 16.

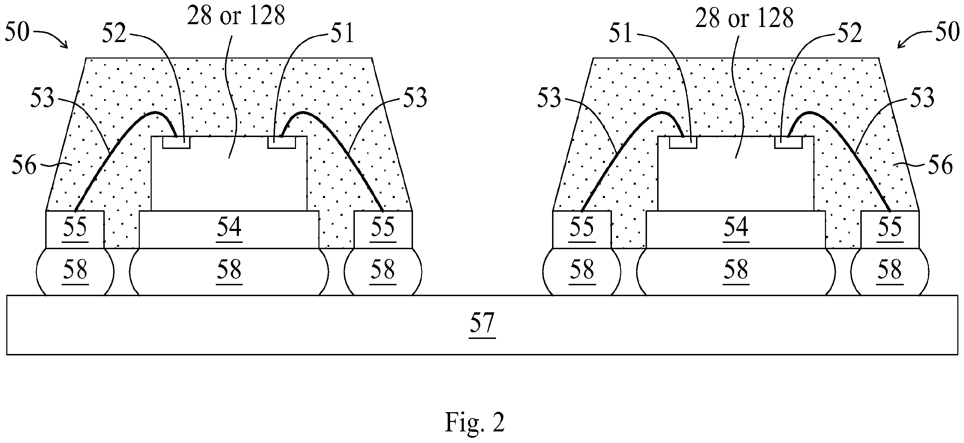

Fig. 2 illustrates packages for two single integrated-circuit (IC) chips in accordance with the first embodiment of the present application. Referring to Figs. 1A, 1B, 1C and 2, each of the single integrated-circuit (IC) chips 28 and/or 128 may be packaged into a quad flat no-lead (QFN) package 50 mentioned as below. Each of the single integrated-circuit (IC) chips 28 and/or 128 may have four input metal pads 51 (only one is shown) each coupled to the single-ended input of one of its four amplifiers 17 and an output metal pad 52 coupled to the output of its combiner 26 as shown in Fig. IB for the single integrated-circuit (IC) chip 28 or to the output of its amplifier 170 as shown in Fig. 1C for the single integrated-circuit (IC) chip 128. The input and output metal pads 51 and 52 may be made of aluminum or cupper at a front side of said each of the single integrated-circuit (IC) chips 28 and/or 128. Each of the two quad flat no-lead (QFN) packages 50 includes one of the single integrated-circuit (IC) chips 28 and 128, a die pad 54 having said one of the single integrated-circuit (IC) chips 28 and 128 mounted to a front side thereof and multiple metal pads 55 surrounding the die pad 54 in a plane, multiple wires 53 made of gold or cupper each having an end wirebonded to a front side of one of the metal pads 55 and the other end wirebonded to one of the input and output metal pads 51 and 52 of said one of the single integrated-circuit (IC) chips 28 and 128 and a polymer compound 56 encapsulating the wires 53, the metal pads 55 and said one of the single integrated-circuit (IC) chips 28 and 128.

Referring to Figs. 1A, 1B, 1C and 2, a carrier 57, such as printed circuit board or ceramic substrate, may be provided to have the two quad flat no-lead (QFN) packages 50 mounted thereto via a tin-containing solder 58. The tin-containing solder 58 may join back sides of the die pads 54 to the carrier 57 and join back sides of the metal pads 55 to the carrier 57. The two multi-stage amplifiers 11, two splitters 12, four band-pass filters (BPF) 13, two synthesizers 14 and four mixers 15 in the radio-frequency (RF) module 30 may be incorporated into another single integrated-circuit (IC) chip (not shown), which may be packaged to be mounted to the carrier 57, or may be discretely mounted to the carrier 57. The four splitters 16 in the splitter matrix 40 may be incorporated into another single integrated-circuit (IC) chip (not shown), which may be packaged to be mounted to the carrier 57, or may be discretely mounted to the carrier 57.

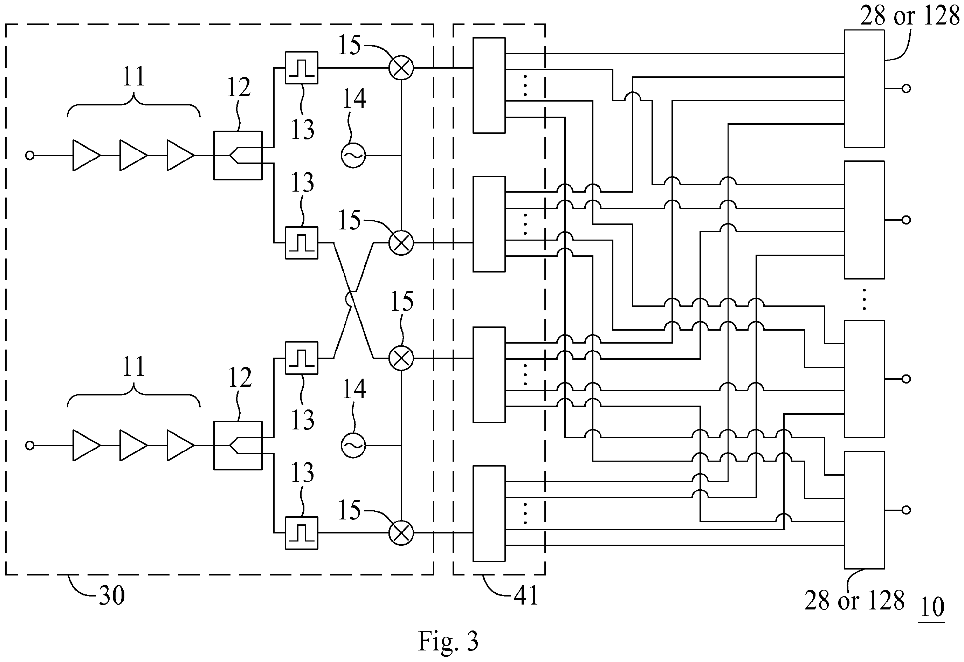

Fig. 3 illustrates a block diagram of a signal receiver. The same reference number illustrated in Figs. 1A, 1B and 3 indicates elements having the same functions. In Figs. 1A and 1B, the output of each of the mixers 15 in the radio-frequency (RF) module 30 is split by the splitter matrix 40 into two identities with substantially the same power. Alternatively, referring to Fig. 3, the output of each of the mixers 15 in the radio-frequency (RF) module 30 may be split by another splitter matrix 41 into any number of identities, such as four ones, with substantially the same power. The number of a fourth combination of the single integrated-circuit (IC) chips 28 and 128, such as four ones, may be provided each including the four amplifiers 17 having four respective inputs associated with the outputs of the four respective mixers 15 via connection of the splitter matrix 41. The fourth combination may include a single type of the single integrated-circuit (IC) chips 28, each of which is provided with the combiner 26 configured to generate its output as an output of said each of the single integrated-circuit (IC) chips 28. Alternatively, the fourth combination may include a single type of the single integrated-circuit (IC) chips 128, each of which is provided with the amplifier 170 configured to generate its output as an output of said each of the single integrated-circuit (IC) chips 128. Alternatively, the fourth combination may include one or more of the single integrated-circuit (IC) chips 28 that is provided with the combiner 26 configured to generate its output as an output of said one or more of the single integrated-circuit (IC) chips 28 and one or more of the single integrated-circuit (IC) chips 128 that is provided with the amplifier 170 configured to generate its output as an output of said one or more of the single integrated-circuit (IC) chips 128.

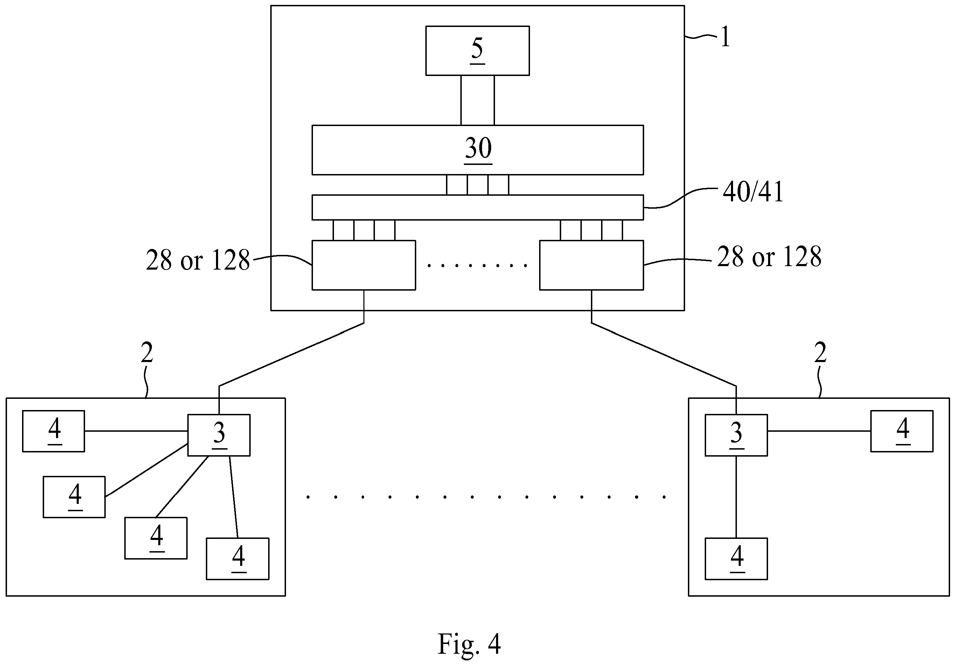

Fig. 4 illustrates a block diagram of a signal receiver set in an outdoor unit to work with multiple indoor units. Referring to Fig. 4, the signal receiver as illustrated in Figs. 1A, 1B, 1C or 3 may be set in an outdoor unit 1 to have the two sets of multi-stage amplifiers 11 in the radio-frequency (RF) module 30 with their two inputs associated respectively with vertically and horizontally polarized signals collected by the antenna feed horn 5 of the outdoor unit 1 or associated respectively with left-hand and right-hand circularly polarized signals collected by the antenna feed horn 5 of the outdoor unit 1. The combiner 26 incorporated in each of the single integrated-circuit (IC) chips 28 or the amplifier 170 incorporated in each of the single integrated-circuit (IC) chips 128 may generate its output as an output of the outdoor unit 1 to be coupled to one of indoor units 2. Each of the indoor units 2 may include a splitter 3, i.e. power divider, to split its input associated with the output of the combiner 26 incorporated in one of the single integrated-circuit (IC) chips 28 or the output of the amplifier 170 incorporated in one of the single integrated-circuit (IC) chips 128 into multiple identities with substantially the same power at multiple respective outputs of the splitter 3 and multiple setup boxes 4 each having an input coupled to one of the outputs of the splitter 3 to demodulate its input into an output. Alternatively, if one of the indoor units 2 has only one setup box 4, the splitter 3 may be omitted in said one of the indoor units 2 and the only one setup box 4 has an input associated with an output of the combiner 26 incorporated in one of the single integrated-circuit (IC) chips 28 or an output of the amplifier 170 incorporated in one of the single integrated-circuit (IC) chips 128.

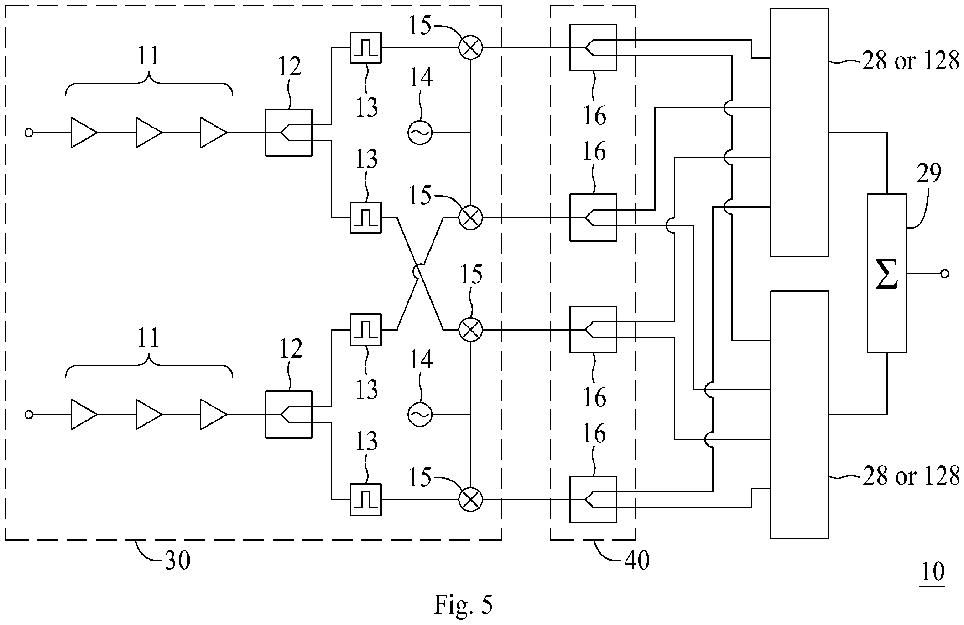

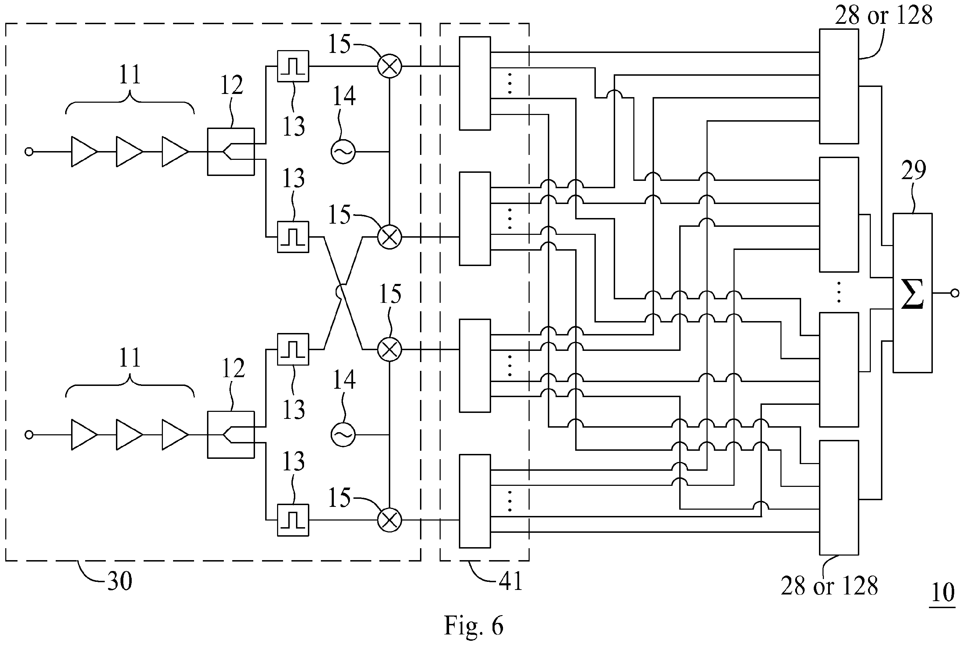

Fig. 5 and 6 illustrate a block diagram of a signal receiver. The same reference number illustrated in Figs. 1A, 1B, 3, 5 and 6 indicates elements having the same functions. Referring to Fig. 5, the signal receiver 10 may further include a combiner 29 having its multiple inputs each coupled to the output of one of the combiners 26 of the single integrated-circuit (IC) chips 28 in the first, second or third combination or the output of one of the amplifiers 170 of the single integrated-circuit (IC) chips 128 in the first, second and third combination and combine its multiple inputs into an output. Referring to Fig. 6, the signal receiver 10 may further include a combiner 29 having its multiple inputs each coupled to the output of one of the combiners 26 of the single integrated-circuit (IC) chips 28 in the fourth combination or the output of one of the amplifiers 170 of the single integrated-circuit (IC) chips 128 in the fourth combination and combine its multiple inputs into an output.

### Second Example

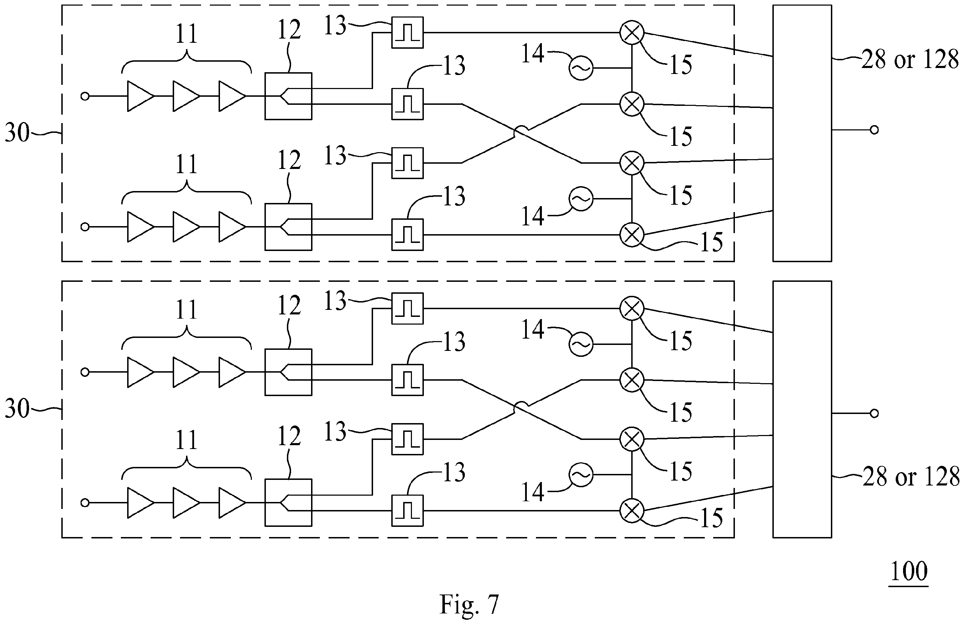

Fig. 7 illustrates a block diagram of a signal receiver in accordance with a second example. The same reference number illustrated in Figs. 1A, 1B, 1C and 7 indicates elements having the same functions. Alternatively, referring to Figs. 1A, 1B, 1C and 7, the splitter matrix 40 illustrated in Fig. 1A may be omitted, but the radio-frequency module 30 illustrated in Fig. 1A may be doubled to be arranged in parallel to work with a fifth combination of the two single integrated-circuit (IC) chips 28 and/or 128 arranged in parallel respectively. The fifth combination may include the two single integrated-circuit (IC) chips 28 arranged in parallel to each other and with the same circuit structure as the single integrated-circuit (IC) chip 28 as shown in Fig. IB. Alternatively, the fifth combination may include the two single integrated-circuit (IC) chips 128 arranged in parallel to each other and with the same circuit structure as the single integrated-circuit (IC) chip 128 as shown in Fig. 1C. Alternatively, the fifth combination may include the single integrated-circuit (IC) chips 28 and 128 arranged in parallel to each other. Referring to Fig. 7, with regard to the second embodiment, a signal receiver 100 is provided with the two radio-frequency modules 30 coupled in series to the fifth combination of the two single integrated-circuit (IC) chips 28 and/or 128 respectively. Each of the two radio-frequency modules 30 may process vertically and horizontally polarized signals or right-hand and left-hand circularly polarized signals, collected by one of antenna feed horns of the signal receiver 10 at a focal point of an antenna dish or reflector dish of the outdoor unit, from multiple satellites in a field of view of the signal receiver 100. For example, a vertically polarized signal collected from one of the antenna feed horns may be transmitted to the input of a top one of the two sets of multi-stage amplifiers 11 in a top one of the radio-frequency modules 30, and a horizontally polarized signal collected from said one of the antenna feed horns may be transmitted to the input of a bottom one of the two sets of multi-stage amplifiers 11 in the top one of the radio-frequency modules 30; another vertically polarized signal collected from another one of the antenna feed horns may be transmitted to the input of a top one of the two sets of multi-stage amplifiers 11 in a bottom one of the radio-frequency modules 30, and another horizontally polarized signal collected from said another one of the antenna feed horns may be transmitted to the input of a bottom one of the two sets of multi-stage amplifiers 11 in the bottom one of the radio-frequency modules 30. Alternatively, a left-hand circularly polarized signal collected from one of the antenna feed horns may be transmitted to the input of a top one of the two sets of multi-stage amplifiers 11 in a top one of the radio-frequency modules 30, and a right-hand circularly polarized signal collected from said one of the antenna feed horns may be transmitted to the input of a bottom one of the two sets of multi-stage amplifiers 11 in the top one of the radio-frequency modules 30; another left-hand circularly polarized signal collected from another one of the antenna feed horns may be transmitted to the input of a top one of the two sets of multi-stage amplifiers 11 in a bottom one of the radio-frequency modules 30, and another right-hand circularly polarized signal collected from said another one of the antenna feed horns may be transmitted to the input of a bottom one of the two sets of multi-stage amplifiers 11 in the bottom one of the radio-frequency modules 30. Alternatively, a vertically polarized signal collected from one of the antenna feed horns may be transmitted to the input of a top one of the two sets of multi-stage amplifiers 11 in a top one of the radio-frequency modules 30, and a horizontally polarized signal collected from said one of the antenna feed horns may be transmitted to the input of a bottom one of the two sets of multi-stage amplifiers 11 in the top one of the radio-frequency modules 30; a left-hand circularly polarized signal collected from another one of the antenna feed horns may be transmitted to the input of a top one of the two sets of multi-stage amplifiers 11 in a bottom one of the radio-frequency modules 30, and a right-hand circularly polarized signal collected from said another one of the antenna feed horns may be transmitted to the input of a bottom one of the two sets of multi-stage amplifiers 11 in the bottom one of the radio-frequency modules 30.

Referring to Figs. 1B, 1C and 7, each of the four amplifiers 17 in a top one of the single integrated-circuit (IC) chips 28 and/or 128 in the fifth combination may have its single-ended input coupled to the output of one of the four mixers 15 in a top one of the two radio-frequency modules 30, and each of the four amplifiers 17 in a bottom one of the single integrated-circuit (IC) chips 28 and/or 128 in the fifth combination may have its single-ended input coupled to the output of one of the four mixers 15 in a bottom one of the two radio-frequency modules 30.

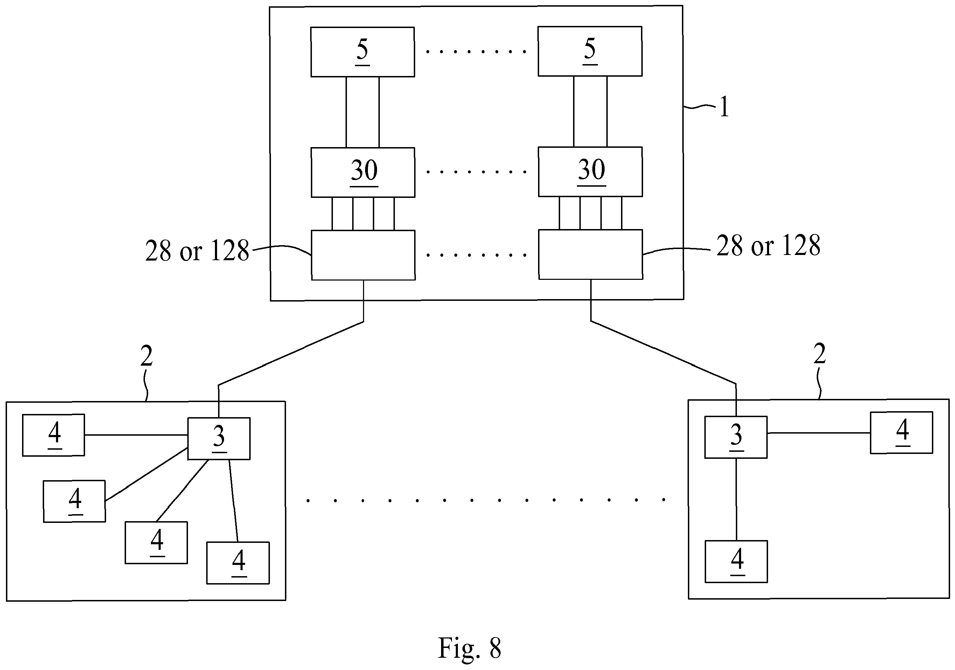

Fig. 8 illustrates a block diagram of a signal receiver set in an outdoor unit to work with multiple indoor units. Referring to Fig. 8, the outdoor unit may include the radio-frequency modules 30 arranged in parallel with the number greater than or equal to two, such as four, and a sixth combination of the single integrated-circuit (IC) chips 28 and/or 128 arranged in parallel with the number greater than or equal to two, such as four, wherein the radio-frequency modules 30 may be coupled in series to the sixth combination of the single integrated-circuit (IC) chips 28 and 128 respectively. The sixth combination may include a single type of the single integrated-circuit (IC) chips 28 as seen in Fig. 1B, each of which is provided with the combiner 26 configured to generate its output as an output of said each of the single integrated-circuit (IC) chips 28. Alternatively, the sixth combination may include a single type of the single integrated-circuit (IC) chips 128 as seen in Fig. 1C, each of which is provided with the amplifier 170 configured to generate its output as an output of said each of the single integrated-circuit (IC) chips 128. Alternatively, the sixth combination may include one or more of the single integrated-circuit (IC) chips 28 as seen in Fig. IB that is provided with the combiner 26 configured to generate its output as an output of said one or more of the single integrated-circuit (IC) chips 28 and one or more of the single integrated-circuit (IC) chips 128 as seen in Fig. 1C that is provided with the amplifier 170 configured to generate its output as an output of said one or more of the single integrated-circuit (IC) chips 128. Each of the radio-frequency modules 30 may have the two sets of multi-stage amplifiers 11 to process vertically and horizontally polarized signals respectively or right-hand and left-hand circularly polarized signals respectively, collected by one of antenna feed horns 5 of the signal receiver 10 at a focal point of an antenna dish or reflector dish of the outdoor unit, from multiple satellites in a field of view of the signal receiver 100. Each of the indoor units 2 may include a splitter 3, i.e. power divider, to split its input associated with the output of the combiner 26 incorporated in one of the single integrated-circuit (IC) chips 28 or the output of the amplifier 170 incorporated in one of the single integrated-circuit (IC) chips 128 into multiple identities with substantially the same power at multiple respective outputs of the splitter 3 and multiple setup boxes 4 each having an input coupled to one of the outputs of the splitter 3 to demodulate its input into an output. Alternatively, if one of the indoor units 2 has only one setup box 4, the splitter 3 may be omitted in said one of the indoor units 2 and the only one setup box 4 has an input associated with the output of the combiner 26 incorporated in one of the single integrated-circuit (IC) chips 28 or the output of the amplifier 170 incorporated in one of the single integrated-circuit (IC) chips 128.

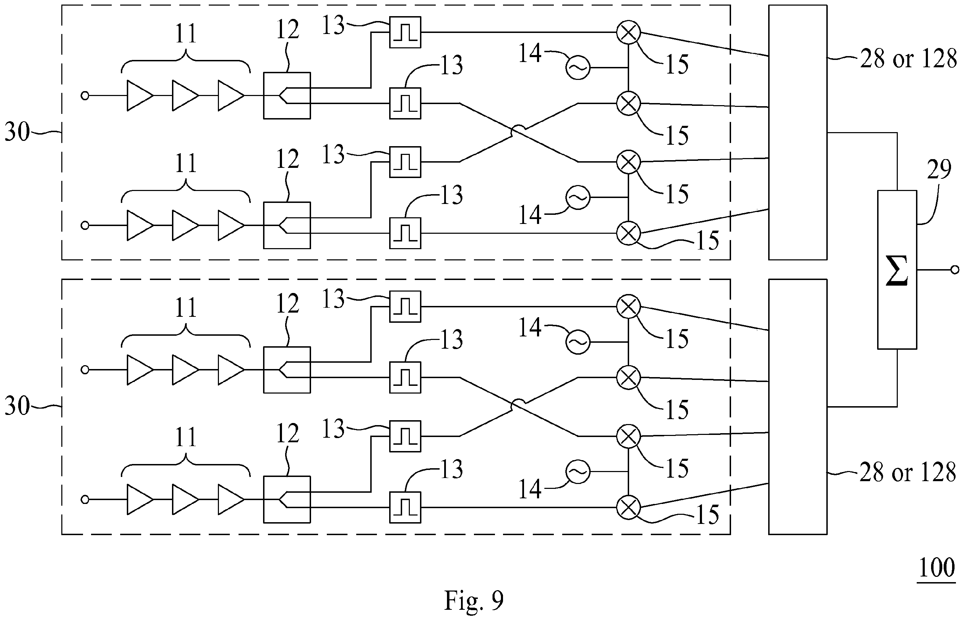

Fig. 9 illustrates a block diagram of a signal receiver. The same reference number illustrated in Figs. 1A, 1B, 1C, 7 and 9 indicates elements having the same functions. Referring to Fig. 9, the signal receiver 100 may further include a combiner 29 having its multiple inputs each coupled to the output of one of the combiners 26 of the single integrated-circuit (IC) chips 28 in the fifth combination or the output of one of the amplifiers 170 of the single integrated-circuit (IC) chips 128 in the fifth combination and combine its multiple inputs into an output.

## Claims

1. A signal receiver comprising
a first synthesizer (14) configured to generate an oscillating output,
a first mixer (15) configured to mix its first input with its second input associated with said oscillating output of said first synthesizer (14) into an output,
a first splitter (16) configured to split its input associated with said output of said first mixer (15) into a first output and a second output,
a first switch matrix (18) configured to switch its first input associated with said first output of said first splitter (16) into a first output,
a second switch matrix (18) configured to switch its first input associated with said second output of said first splitter (16) into a first output,
a second synthesizer (20) configured to generate an oscillating output,
a second mixer (21) configured to mix its first input associated with said first output of said first switch matrix (18) with its second input associated with said oscillating output of said second synthesizer (20) into an output,
a third synthesizer (20) configured to generate an oscillating output, and
a third mixer (21) configured to mix its first input associated with said first output of said second switch matrix (18) with its second input associated with said oscillating output of said third synthesizer (20) into an output,
**characterised in that**
said first switch matrix (18), second synthesizer (20) and second mixer (21) are incorporated in a first single integrated-circuit (IC) chip (28), and said second switch matrix (18), third synthesizer (20) and third mixer (21) are incorporated in a second single integrated-circuit (IC) chip (28).

2. The signal receiver of claim 1 further comprising a first single-ended-to-differential amplifier (17) configured to amplify its single-ended input associated with said first output of said first splitter (16) into a differential output with a phase difference of substantially 180 degrees, a second single-ended-to-differential amplifier (17) configured to amplify its single-ended input associated with said second output of said first splitter (16) into a differential output with a phase difference of substantially 180 degrees, wherein said first input of said first switch matrix (18) comprises a differential input associated with said differential output of said first single-ended-to-differential amplifier (17), wherein said first input of said second switch matrix (18) comprises a differential input associated with said differential output of said second single-ended-to-differential amplifier (17), wherein said first output of said first switch matrix (18) comprises a first differential output with a phase difference of substantially 180 degrees, wherein said first output of said second switch matrix (18) comprises a first differential output with a phase difference of substantially 180 degrees, wherein said first input of said second mixer (21) is associated with said first differential output of said first switch matrix (18), wherein said first input of said third mixer (21) is associated with said first differential output of said second switch matrix (18), wherein said first single-ended-to-differential amplifier (17) is incorporated in said first single integrated-circuit (IC) chip (28) and said second single-ended-to-differential amplifier (17) is incorporated in said second single integrated-circuit (IC) chip (28).

3. The signal receiver of claim 1 further comprising a fourth mixer (15) configured to mix its first input with its second input associated with said oscillating output of said first synthesizer (14) into an output, a second splitter (16) configured to split its input associated with said output of said fourth mixer (15) into a first output and a second output, wherein said first switch matrix (18) is configured to switch its second input associated with said first output of said second splitter (16) into a second output, wherein said second switch matrix (18) is configured to switch its second input associated with said second output of said second splitter (16) into a second output, a fourth synthesizer (20) configured to generate an oscillating output, a fifth mixer (21) configured to mix its first input associated with said second output of said first switch matrix (18) with its second input associated with said oscillating output of said fourth synthesizer (20) into an output, a fifth synthesizer (20) configured to generate an oscillating output, a sixth mixer (21) configured to mix its first input associated with said second output of said second switch matrix (18) with its second input associated with said oscillating output of said fifth synthesizer (20) into an output, a first combiner (26) configured to combine its first input associated with said output of said second mixer (21) and its second input associated with said output of said fifth mixer (21) into an output and a second combiner (26) configured to combine its first input associated with said output of said third mixer (21) and its second input associated with said output of said sixth mixer (21) into an output, wherein said fourth synthesizer (20), fifth mixer (21) and first combiner (26) are incorporated in said first single integrated-circuit (IC) chip (28), and said fifth synthesizer (20), sixth mixer (21) and second combiner (26) are incorporated in said second single integrated-circuit (IC) chip (28).

4. The signal receiver of claim 3 further comprising a first image rejection filter (23) configured to suppress an image component of its input associated with said output of said second mixer (21) into an output, a second image rejection filter (23) configured to suppress an image component of its input associated with said output of said third mixer (21) into an output, a third image rejection filter (23) configured to suppress an image component of its input associated with said output of said fifth mixer (21) into an output, a fourth image rejection filter (23) configured to suppress an image component of its input associated with said output of said sixth mixer (21) into an output, a sixth synthesizer (24) configured to generate an oscillating output, a seventh mixer (25) configured to mix its first input associated with said output of said first image rejection filter (23) with its second input associated with said oscillating output of said sixth synthesizer (24) into an output, a seventh synthesizer (24) configured to generate an oscillating output, an eighth mixer (25) configured to mix its first input associated with said output of said second image rejection filter (23) with its second input associated with said oscillating output of said seventh synthesizer (24) into an output, an eighth synthesizer (24) configured to generate an oscillating output, a ninth mixer (25) configured to mix its first input associated with said output of said third image rejection filter (23) with its second input associated with said oscillating output of said eighth synthesizer (24) into an output, a ninth synthesizer (24) configured to generate an oscillating output and a tenth mixer (25) configured to mix its first input associated with said output of said fourth image rejection filter (23) with its second input associated with said oscillating output of said ninth synthesizer (24) into an output, wherein said first input of said first combiner (26) is associated with said output of said seventh mixer (25) and said second input of said first combiner (26) is associated with said output of said ninth mixer (25), wherein said first input of said second combiner (26) is associated with said output of said eighth mixer (25) and said second input of said second combiner (26) is associated with said output of said tenth mixer (25), wherein said sixth and eighth synthesizers (24) and seventh and ninth mixers (25) are incorporated in said first single integrated-circuit (IC) chip (28), and said seventh and ninth synthesizers (24) and eighth and tenth mixers (25) are incorporated in said second single integrated-circuit (IC) chip (28).

5. The signal receiver of claim 1 further comprising a first differential-to-differential amplifier (19) configured to amplify its differential input associated with said first output of said first switch matrix (18) into its differential output and a second differential-to-differential amplifier (19) configured to amplify its differential input associated with said first output of said second switch matrix (18) into its differential output, wherein said first input of said second mixer (21) is associated with said differential output of said first differential-to-differential amplifier (19), wherein said first input of said third mixer (21) is associated with said differential output of said second differential-to-differential amplifier (19), wherein said first differential-to-differential amplifier (19) is incorporated in said first single integrated-circuit (IC) chip (28), and said second differential-to-differential amplifier (19) is incorporated in said second single integrated-circuit (IC) chip (28).

6. The signal receiver of claim 1 further comprising a first differential-to-differential amplifier (22) configured to amplify its differential input associated with said output of said second mixer (21) into its differential output and a second differential-to-differential amplifier (22) configured to amplify its differential input associated with said output of said third mixer (21) into its differential output, wherein said first differential-to-differential amplifier (22) is incorporated in said first single integrated-circuit (IC) chip (28), and said second differential-to-differential amplifier (22) is incorporated in said second single integrated-circuit (IC) chip (28).

7. The signal receiver of claim 1 further comprising a fourth synthesizer (14) configured to generate an oscillating output, a fourth mixer (15) configured to mix its first input with its second input associated with said oscillating output of said fourth synthesizer (14) into an output, a second splitter (16) configured to split its input associated with said output of said fourth mixer (15) into a first output and a second output, wherein said first switch matrix (18) is configured to switch its second input associated with said first output of said second splitter (16) into a second output, wherein said second switch matrix (18) is configured to switch its second input associated with said second output of said second splitter (16) into a second output, a fifth synthesizer (20) configured to generate an oscillating output, a fifth mixer (21) configured to mix its first input associated with said second output of said first switch matrix (18) with its second input associated with said oscillating output of said fifth synthesizer (20) into an output, a sixth synthesizer (20) configured to generate an oscillating output, a sixth mixer (21) configured to mix its first input associated with said second output of said second switch matrix (18) with its second input associated with said oscillating output of said sixth synthesizer (20) into an output, a first combiner (26) configured to combine its first input associated with said output of said second mixer (21) and its second input associated with said output of said fifth mixer (21) into an output and a second combiner (26) configured to combine its first input associated with said output of said third mixer (21) and its second input associated with said output of said sixth mixer (21) into an output, wherein said fifth synthesizer (20), fifth mixer (21) and first combiner (26) are incorporated in said first single integrated-circuit (IC) chip (28), and said sixth synthesizer (20), sixth mixer (21) and second combiner (26) are incorporated in said second single integrated-circuit (IC) chip (28).

8. The signal receiver of claim 7 further comprising a third combiner (29) configured to combine its first input associated with said output of said first combiner (26) and its second input associated with said output of said second combiner (26) into an output.

9. The signal receiver of claim 1 further comprising a first image rejection filter (23) configured to suppress an image component of its input associated with said output of said second mixer (21) into an output, a second image rejection filter (23) configured to suppress an image component of its input associated with said output of said third mixer (21) into an output, a fourth synthesizer (24) configured to generate an oscillating output, a fourth mixer (25) configured to mix its first input associated with said output of said first image rejection filter (23) with its second input associated with said oscillating output of said fourth synthesizer (24) into an output, a fifth synthesizer (24) configured to generate an oscillating output, a fifth mixer (25) configured to mix its first input associated with said output of said second image rejection filter (23) with its second input associated with said oscillating output of said fifth synthesizer (24) into an output, a first combiner (26) configured to combine its first input associated with said output of said fourth mixer (25) and its second input into an output and a second combiner (26) configured to combine its first input associated with said output of said fifth mixer (25) and its second input into an output, wherein said fourth synthesizer (24), fourth mixer (25), first image rejection filter (23) and first combiner (26) are incorporated in said first single integrated-circuit (IC) chip (28), and said fifth synthesizer (24), fifth mixer (25), second image rejection filter (23) and second combiner (26) are incorporated in said second single integrated-circuit (IC) chip (28).

10. The signal receiver of claim 9, wherein said oscillating output of said fourth synthesizer (24) is configured to be adjusted based on information containing said oscillating output of said second synthesizer (20).

11. The signal receiver of claim 9 further comprising an optimization unit (27) configured to adjust said oscillating output of said second synthesizer (20) with a first frequency and adjust said oscillating output of said fourth synthesizer (24) with a second frequency, wherein said first and second frequencies have substantially the same level in the opposite directions, wherein said optimization unit (27) is incorporated in said first single integrated-circuit (IC) chip (28).

12. The signal receiver of claim 9 further comprising a first differential-to-differential amplifier (22) configured to amplify its differential input associated with said output of said second mixer (21) into its differential output and a second differential-to-differential amplifier (22) configured to amplify its differential input associated with said output of said third mixer (21) into its differential output, wherein said input of said first image rejection filter (23) is associated with said differential output of said first differential-to-differential amplifier (22), and said input of said second image rejection filter (23) is associated with said differential output of said second differential-to-differential amplifier (22), wherein said first differential-to-differential amplifier (22) is incorporated in said first single integrated-circuit (IC) chip (28), and said second differential-to-differential amplifier (22) is incorporated in said second single integrated-circuit (IC) chip (28).

13. The signal receiver of claim 1, wherein said first and second single integrated-circuit (IC) chips (28) are configured to be set in an outdoor unit (1), wherein said first input of said first mixer (15) is associated with a satellite signal reflected by an antenna dish.

14. A single integrated-circuit (IC) chip (28) comprising
a switch matrix (18) configured to switch its first input into a first output and switch its second input into a second output,
a first synthesizer (20) configured to generate an oscillating output,
a first mixer (21) configured to mix its first input associated with said first output of said switch matrix (18) with its second input associated with said oscillating output of said first synthesizer (20) into an output,
a second synthesizer (20) configured to generate an oscillating output,
a second mixer (21) configured to mix its first input associated with said second output of said switch matrix (18) with its second input associated with said oscillating output of said second synthesizer (20) into an output,
a first filter (23) configured to suppress a component of its input associated with said output of said first mixer (21) into an output, and
a second filter (23) configured to suppress a component of its input associated with said output of said second mixer (21) into an output,
**characterised in that**
said single integrated-circuit (IC) chip (28) further comprises:
a third synthesizer (24) configured to generate an oscillating output;
a third mixer (25) configured to mix its first input associated with said output of said first filter (23) with its second input associated with said oscillating output of said third synthesizer (24) into an output;
a fourth synthesizer (24) configured to generate an oscillating output;
a fourth mixer (25) configured to mix its first input associated with said output of said second filter (23) with its second input associated with said oscillating output of said fourth synthesizer (24) into an output; and
a combiner (26) configured to combine its first input associated with said output of said third mixer (25) and its second input associated with said output of said fourth mixer (25) into an output, wherein said switch matrix (18), first, second, third and fourth synthesizers (20, 24), first, second, third and fourth mixers (21, 25), first and second filters (23) and combiner (26) are incorporated in said single integrated-circuit (IC) chip (28).

15. The single integrated-circuit (IC) chip (28) of claim 14, wherein said first filter (23) comprises an image rejection filter (23) configured to suppress an image component of said input of said first filter into said output of said first filter (23).

16. The single integrated-circuit (IC) chip (28) of claim 14 further comprising an optimization unit (27) configured to adjust said oscillating output of said first synthesizer (20) by adding a frequency and to adjust said oscillating output of said third synthesizer (24) by subtracting said frequency, wherein said optimization unit (27) is incorporated in said single integrated-circuit (IC) chip (28).

17. The single integrated-circuit (IC) chip (28) of claim 14 further comprising a first single-ended-to-differential amplifier (17) configured to amplify its single-ended input into a differential output with a phase difference of substantially 180 degrees, a second single-ended-to-differential amplifier (17) configured to amplify its single-ended input into a differential output with a phase difference of substantially 180 degrees, wherein said first input of said switch matrix (18) comprises a differential input associated with said differential output of said first single-ended-to-differential amplifier (17), wherein said second input of said switch matrix (18) comprises a differential input associated with said differential output of said second single-ended-to-differential amplifier (17), wherein said first output of said switch matrix (18) comprises a differential output with a phase difference of substantially 180 degrees, wherein said second output of said switch matrix (18) comprises a differential output with a phase difference of substantially 180 degrees, a first differential-to-differential amplifier (19) configured to amplify its differential input associated with said first output of said switch matrix (18) into its differential output and a second differential-to-differential amplifier (19) configured to amplify its differential input associated with said second output of said switch matrix (18) into its differential output, wherein said first input of said first mixer (21) is associated with said differential output of said first differential-to-differential amplifier (19), wherein said first input of said second mixer (21) is associated with said differential output of said second differential-to-differential amplifier (19), wherein said first and second single-ended-to-differential amplifiers (17) and first and second differential-to-differential amplifiers (19) are incorporated in said single integrated-circuit (IC) chip (28).

## Patentansprüche

1. Signalempfänger umfassend
einen ersten Synthesizer (14), der so konfiguriert ist, dass er ein oszillierendes Ausgangssignal erzeugt,
einen ersten Mischer (15), der so konfiguriert ist, dass er seinen ersten Eingang mit seinem zweiten Eingang, der mit dem oszillierenden Ausgang des ersten Synthesizers (14) verbunden ist, zu einem Ausgang mischt,
einen ersten Splitter (16), der so konfiguriert ist, dass er seinen Eingang, der mit dem Ausgang des ersten Mischers (15) verbunden ist, in einen ersten Ausgang und einen zweiten Ausgang aufteilt,
eine erste Schaltmatrix (18), die so konfiguriert ist, dass sie ihren ersten Eingang, der mit dem ersten Ausgang des ersten Splitters (16) verbunden ist, in einen ersten Ausgang schaltet,
eine zweite Schaltmatrix (18), die so konfiguriert ist, dass sie ihren ersten Eingang, der mit dem zweiten Ausgang des ersten Splitters (16) verbunden ist, in einen ersten Ausgang schaltet,
einen zweiten Synthesizer (20), der so konfiguriert ist, dass er einen oszillierenden Ausgang erzeugt,
einen zweiten Mischer (21), der so konfiguriert ist, dass er seinen ersten Eingang, der mit dem ersten Ausgang der ersten Schaltmatrix (18) verbunden ist, mit seinem zweiten Eingang, der mit dem oszillierenden Ausgang des zweiten Synthesizers (20) verbunden ist, zu einem Ausgang mischt,
einen dritten Synthesizer (20), der so konfiguriert ist, dass er einen oszillierenden Ausgang erzeugt, und
einen dritten Mischer (21), der so konfiguriert ist, dass er seinen ersten Eingang, der mit dem ersten Ausgang der zweiten Schaltmatrix (18) verbunden ist, mit seinem zweiten Eingang, der mit dem oszillierenden Ausgang des dritten Synthesizers (20) verbunden ist, zu einem Ausgang mischt,
**dadurch gekennzeichnet, dass**
die erste Schaltmatrix (18), der zweite Synthesizer (20) und der zweite Mischer (21) in einem ersten einzelnen integrierten Schaltkreis - (IC) - Chip (28) enthalten sind, und die zweite Schaltmatrix (18), der dritte Synthesizer (20) und der dritte Mischer (21) in einem zweiten einzelnen integrierten Schaltkreis - (IC) - Chip (28) enthalten sind.

2. Signalempfänger nach Anspruch 1, der ferner umfasst: einen ersten Eintakt - Differential - Verstärker (17), der so konfiguriert ist, dass er seinen Eintakteingang, der dem ersten Ausgang des ersten Splitters (16) zugeordnet ist, zu einem Differentialausgang mit einer Phasendifferenz von im Wesentlichen 180 Grad verstärkt, einen zweiten Eintakt - Differential - Verstärker (17), der so konfiguriert ist, dass er seinen Eintakteingang, der dem zweiten Ausgang des ersten Splitters (16) zugeordnet ist, zu einem Differentialausgang mit einer Phasendifferenz von im Wesentlichen 180 Grad verstärkt, wobei der erste Eingang der ersten Schaltmatrix (18) einen Differentialeingang umfasst, der mit dem Differentialausgang des ersten Eintakt - Differential - Verstärkers (17) verbunden ist, wobei der erste Eingang der zweiten Schaltmatrix (18) einen Differentialeingang umfasst, der mit dem Differentialausgang des zweiten Eintakt - Differential - Verstärkers (17) zugeordnet ist, wobei der erste Ausgang der ersten Schaltmatrix (18) einen ersten Differentialausgang mit einer Phasendifferenz von im Wesentlichen 180 Grad umfasst, wobei der erste Ausgang der zweiten Schaltmatrix (18) einen ersten Differentialausgang mit einer Phasendifferenz von im Wesentlichen 180 Grad umfasst, wobei der erste Eingang des zweiten Mischers (21) mit dem ersten Differentialausgang der ersten Schaltmatrix (18) verbunden ist, wobei der erste Eingang des dritten Mischers (21) mit dem ersten Differentialausgang der zweiten Schaltmatrix (18) verbunden ist, wobei der erste Eintakt - Differential - Verstärker (17) in dem ersten einzelnen integrierten Schaltkreis - (IC) - Chip (28) enthalten ist und der zweite Eintakt - Differential - Verstärker (17) in dem zweiten einzelnen integrierten Schaltkreis - (IC) - Chip (28) enthalten ist.

3. Signalempfänger nach Anspruch 1, der ferner umfasst: einen vierten Mischer (15), der so konfiguriert ist, dass er seinen ersten Eingang mit seinem zweiten Eingang, der mit dem oszillierenden Ausgang des ersten Synthesizers (14) verbunden ist, zu einem Ausgang mischt, einen zweiten Splitter (16), der so konfiguriert ist, dass er seinen Eingang, der mit dem Ausgang des vierten Mischers (15) verbunden ist, in einen ersten Ausgang und einen zweiten Ausgang teilt, wobei die erste Schaltmatrix (18) so konfiguriert ist, dass sie ihren zweiten Eingang, der mit dem ersten Ausgang des zweiten Splitters (16) verbunden ist, in einen zweiten Ausgang schaltet, wobei die zweite Schaltmatrix (18) so konfiguriert ist, dass sie ihren zweiten Eingang, der mit dem zweiten Ausgang des zweiten Splitters (16) verbunden ist, in einen zweiten Ausgang schaltet, einen vierten Synthesizer (20), der so konfiguriert ist, dass er einen oszillierenden Ausgang erzeugt, einen fünften Mischer (21), der so konfiguriert ist, dass er seinen ersten Eingang, der mit dem zweiten Ausgang der ersten Schaltmatrix (18) verbunden ist, mit seinem zweiten Eingang, der mit dem oszillierenden Ausgang des vierten Synthesizers (20) verbunden ist, zu einem Ausgang mischt, einen fünften Synthesizer (20), der so konfiguriert ist, dass er ein oszillierendes Ausgangssignal erzeugt, einen sechsten Mischer (21), der so konfiguriert ist, dass er seinen ersten, dem zweiten Ausgang der zweiten Schaltmatrix (18) zugeordneten Eingang mit seinem zweiten, dem oszillierenden Ausgangssignal des fünften Synthesizers (20) zugeordneten Eingang zu einem Ausgang mischt, einen ersten Kombinierer (26), der so konfiguriert ist, dass er seinen ersten, dem Ausgang des zweiten Mischers (21) zugeordneten Eingang und seinen zweiten, dem Ausgang des fünften Mischers (21) zugeordneten Eingang zu einem Ausgang kombiniert, und einen zweiten Kombinierer (26), der so konfiguriert ist, dass er seinen ersten, dem Ausgang des dritten Mischers (21) zugeordneten Eingang und seinen zweiten, dem Ausgang des sechsten Mischers (21) zugeordneten Eingang zu einen Ausgang kombiniert, wobei der vierte Synthesizer (20), der fünfte Mischer (21) und der erste Kombinierer (26) in den ersten einzelnen integrierten Schaltkreis - (IC) - Chip (28) integriert sind und der fünfte Synthesizer (20), der sechste Mischer (21) und der zweite Kombinierer (26) in den zweiten einzelnen integrierten Schaltkreis - (IC) - Chip (28) integriert sind.

4. Signalempfänger nach Anspruch 3, der ferner umfasst: einen ersten Bildunterdrückungsfilter (23), der so konfiguriert ist, dass er eine Bildkomponente seines Eingangs, die dem Ausgang des zweiten Mischers (21) zugeordnet ist, in einem Ausgang unterdrückt, einen zweiten Bildunterdrückungsfilter (23), der so konfiguriert ist, dass er eine Bildkomponente seines Eingangs, die dem Ausgang des dritten Mischers (21) zugeordnet ist, in einem Ausgang unterdrückt, einen dritten Bildunterdrückungsfilter (23), der so konfiguriert ist, dass er eine Bildkomponente seines Eingangs, die dem Ausgang des fünften Mischers (21) zugeordnet ist, in einem Ausgang unterdrückt, einen vierten Bildunterdrückungsfilter (23), der so konfiguriert ist, dass er eine Bildkomponente seines Eingangs, die mit dem Ausgang des sechsten Mischers (21) verbunden ist, in einem Ausgang unterdrückt, einen sechsten Synthesizer (24), der so konfiguriert ist, dass er einen oszillierenden Ausgang erzeugt, einen siebten Mischer (25), der so konfiguriert ist, dass er seinen ersten Eingang, der dem Ausgang des ersten Bildunterdrückungsfilters (23) zugeordnet ist, mit seinem zweiten Eingang, der dem oszillierenden Ausgang des sechsten Synthesizers (24) zugeordnet ist, zu einem Ausgang mischt, einen siebten Synthesizer (24), der so konfiguriert ist, dass er einen oszillierenden Ausgang erzeugt, einen achten Mischer (25), der so konfiguriert ist, dass er seinen ersten Eingang, der dem Ausgang des zweiten Bildunterdrückungsfilters (23) zugeordnet ist, mit seinem zweiten Eingang, der dem oszillierenden Ausgang des siebten Synthesizers (24) zugeordnet ist, zu einem Ausgang mischt, einen achten Synthesizer (24), der so konfiguriert ist, dass er einen oszillierenden Ausgang erzeugt, einen neunten Mischer (25), der so konfiguriert ist, dass er seinen ersten Eingang, der dem Ausgang des dritten Bildunterdrückungsfilters (23) zugeordnet ist, mit seinem zweiten Eingang, der dem oszillierenden Ausgang des achten Synthesizers (24) zugeordnet ist, zu einem Ausgang mischt, einen neunten Synthesizer (24), der so konfiguriert ist, dass er einen oszillierenden Ausgang erzeugt, und einen zehnten Mischer (25), der so konfiguriert ist, dass er seinen ersten Eingang, der dem Ausgang des vierten Bildunterdrückungsfilters (23) zugeordnet ist, mit seinem zweiten Eingang, der dem oszillierenden Ausgang des neunten Synthesizers (24) zugeordnet ist, zu einem Ausgang mischt, wobei der erste Eingang des ersten Kombinierers (26) dem Ausgang des siebten Mischers (25) zugeordnet ist und der zweite Eingang des ersten Kombinierers (26) dem Ausgang des neunten Mischers (25) zugeordnet ist, wobei der erste Eingang des zweiten Kombinierers (26) dem Ausgang des achten Mischers (25) zugeordnet ist und der zweite Eingang des zweiten Kombinierers (26) dem Ausgang des zehnten Mischers (25) zugeordnet ist, wobei der sechste und achte Synthesizer (24) und der siebte und neunte Mischer (25) in den ersten einzelnen integrierten Schaltkreis - (IC) - Chip (28) integriert sind, und der siebte und neunte Synthesizer (24) und der achte und zehnte Mischer (25) in den zweiten einzelnen integrierten Schaltkreis - (IC) - Chip (28) integriert sind.

5. Signalempfänger nach Anspruch 1, der ferner umfasst: einen ersten Differential - zu - Differential - Verstärker (19), der so konfiguriert ist, dass er seinen dem ersten Ausgang der ersten Schaltmatrix (18) zugeordneten Differentialeingang in seinen Differentialausgang verstärkt und einen zweiten Differential - zu - Differential - Verstärker (19), der so konfiguriert ist, dass er seinen dem ersten Ausgang der zweiten Schaltmatrix (18) zugeordneten Differentialeingang in seinen Differentialausgang verstärkt, wobei der erste Eingang des zweiten Mischers (21) dem Differentialausgang des ersten Differential - zu - Differential - Verstärkers (19) zugeordnet ist, wobei der erste Eingang des dritten Mischers (21) dem Differentialausgang des zweiten Differential - zu - Differential - Verstärkers (19) zugeordnet ist, wobei der erste Differential - zu - Differentail - Verstärker (19) in dem ersten einzelnen integrierten Schaltkreis - (IC) - Chip (28) enthalten ist und der zweite Differential - zu - Differential - Verstärker (19) in dem zweiten einzelnen integrierten Schaltkreis - (IC) - Chip (28) enthalten ist.

6. Signalempfänger nach Anspruch 1, der ferner umfasst: einen ersten Differential - zu - Differential - Verstärker (22), der so konfiguriert ist, dass er seinen dem Ausgang des zweiten Mischers (21) zugeordneten Differentialeingang in seinen Differentialausgang verstärkt und einen zweiten Differential - zu - Differential - Verstärker (22), der so konfiguriert ist, dass er seinen dem Ausgang des dritten Mischers (21) zugeordneten Differentialeingang in seinen Differentialausgang verstärkt, wobei der erste Differential - zu - Differential - Verstärker (22) in den ersten einzelnen integrierten Schaltkreis - (IC) - Chip (28) integriert ist, und der zweite Differential - zu - Differential - Verstärker (22) in den zweiten einzelnen integrierten Schaltkreis - (IC) - Chip (28) integriert ist.

7. Signalempfänger nach Anspruch 1, der ferner umfasst: einen vierten Synthesizer (14), der so konfiguriert ist, dass er ein oszillierendes Ausgangssignal erzeugt, einen vierten Mischer (15), der so konfiguriert ist, dass er seinen ersten Eingang mit seinem zweiten Eingang, der dem oszillierenden Ausgangssignal des vierten Synthesizers (14) zugeordnet ist, zu einem Ausgang mischt, einen zweiten Splitter (16), der so konfiguriert ist, dass er seinen Eingang, der dem Ausgang des vierten Mischers (15) zugeordnet ist, in einen ersten Ausgang und einen zweiten Ausgang aufteilt, wobei die erste Schaltmatrix (18) so konfiguriert ist, dass sie ihren zweiten Eingang, der mit dem ersten Ausgang des zweiten Splitters (16) verbunden ist, in einen zweiten Ausgang schaltet, wobei die zweite Schaltmatrix (18) so konfiguriert ist, dass sie ihren zweiten Eingang, der mit dem zweiten Ausgang des zweiten Splitters (16) verbunden ist, in einen zweiten Ausgang schaltet, einen fünften Synthesizer (20), der so konfiguriert ist, dass er ein oszillierendes Ausgangssignal erzeugt, einen fünften Mischer (21), der so konfiguriert ist, dass er seinen ersten, dem zweiten Ausgang der ersten Schaltmatrix (18) zugeordneten Eingang, mit seinem zweiten, dem oszillierenden Ausgangssignal des fünften Synthesizers (20) zugeordneten Eingang, zu einem Ausgang mischt, einen sechsten Synthesizer (20), der so konfiguriert ist, dass er ein oszillierendes Ausgangssignal erzeugt, einen sechsten Mischer (21), der so konfiguriert ist, dass er seinen ersten, dem zweiten Ausgang der zweiten Schaltmatrix (18) zugeordneten Eingang, mit seinem zweiten, dem oszillierenden Ausgangssignal des sechsten Synthesizers (20) zugeordneten Eingang, zu einem Ausgangssignal mischt, einen ersten Kombinierer (26), der so konfiguriert ist, dass er seinen ersten Eingang, der dem Ausgang des zweiten Mischers (21) zugeordnet ist, und seinen zweiten Eingang, der dem Ausgang des fünften Mischers (21) zugeordnet ist, zu einem Ausgang kombiniert, und einen zweiten Kombinierer (26), der so konfiguriert ist, dass er seinen ersten Eingang, der dem Ausgang des dritten Mischers (21) zugeordneten ersten Eingang und seinen dem Ausgang des sechsten Mischers (21) zugeordneten zweiten Eingang zu einem Ausgang kombiniert, wobei der fünfte Synthesizer (20), der fünfte Mischer (21) und der erste Kombinierer (26) in dem ersten einzelnen integrierten Schaltkreis - (IC) - Chip (28) enthalten sind, und der sechste Synthesizer (20), der sechste Mischer (21) und der zweite Kombinierer (26) in dem zweiten einzelnen integrierten Schaltkreis - (IC) - Chip (28) enthalten sind.

8. Signalempfänger nach Anspruch 7, der ferner umfasst: einen dritten Kombinierer (29), der so konfiguriert ist, dass er seinen ersten Eingang, der mit dem Ausgang des ersten Kombinierer (26) verbunden ist, und seinen zweiten Eingang, der mit dem Ausgang des zweiten Kombinierers (26) verbunden ist, zu einem Ausgang kombiniert.

9. Signalempfänger nach Anspruch 1, der ferner umfasst: einen ersten Bildunterdrückungsfilter (23), der so konfiguriert ist, dass er eine Bildkomponente seines dem Ausgang des zweiten Mischers (21) zugeordneten Eingangs in einem Ausgang unterdrückt, ein zweiter Bildunterdrückungsfilter (23), der so konfiguriert ist, dass er eine Bildkomponente seines dem Ausgang des dritten Mischers (21) zugeordneten Eingangs in einem Ausgang unterdrückt, einen vierten Synthesizer (24), der so konfiguriert ist, dass er einen oszillierenden Ausgang erzeugt, einen vierten Mischer (25), der so konfiguriert ist, dass er seinen ersten Eingang, der mit dem Ausgang des ersten Bildunterdrückungsfilters (23) verbunden ist, mit seinem zweiten Eingang, der mit dem oszillierenden Ausgang des vierten Synthesizers (24) verbunden ist, zu einem Ausgang mischt, einem fünften Synthesizer (24), der so konfiguriert ist, dass er einen oszillierenden Ausgang erzeugt, einen fünften Mischer (25), der so konfiguriert ist, dass er seinen ersten, dem Ausgang des zweiten Bildunterdrückungsfilters (23) zugeordneten Eingang mit seinem zweiten, dem oszillierenden Ausgang des fünften Synthesizers (24) zugeordneten Eingang zu einem Ausgang mischt, einen ersten Kombinierer (26), der so konfiguriert ist, dass er seinen ersten, dem Ausgang des vierten Mischers (25) zugeordneten Eingang und seinen zweiten Eingang zu einem Ausgang kombiniert und einen zweiten Kombinierer (26), der so konfiguriert ist, dass er seinen dem Ausgang des fünften Mischers (25) zugeordneten ersten Eingang und seinen zweiten Eingang zu einem Ausgang kombiniert, wobei der vierte Synthesizer (24), der vierte Mischer (25), der erste Bildunterdrückungsfilter (23) und der erste Kombinierer (26) in dem ersten einzelnen integrierten Schaltkreis - (IC) - Chip (28) enthalten sind, und der fünfte Synthesizer (24), der fünfte Mischer (25), der zweite Bildunterdrückungsfilter (23) und der zweite Kombinierer (26) in dem zweiten einzelnen integrierten Schaltkreis - (IC) - Chip (28) enthalten sind.

10. Signalempfänger nach Anspruch 9, bei welchem der Schwingungsausgang des vierten Synthesizers (24) so konfiguriert ist, dass er auf der Grundlage von Informationen, die den Schwingungsausgang des zweiten Synthesizers (20) enthalten, eingestellt wird.

11. Signalempfänger nach Anspruch 9, der ferner eine Optimierungseinheit (27) umfasst, die so konfiguriert ist, dass sie das oszillierende Ausgangssignal des zweiten Synthesizers (20) mit einer ersten Frequenz einstellt und das oszillierende Ausgangssignal des vierten Synthesizers (24) mit einer zweiten Frequenz einstellt, wobei die erste und die zweite Frequenz in den entgegengesetzten Richtungen im Wesentlichen den gleichen Pegel haben, wobei die Optimierungseinheit (27) in den ersten einzelnen integrierten Schaltkreis - (IC) - Chip (28) integriert ist.

12. Signalempfänger nach Anspruch 9, der ferner umfasst: einen ersten Differential - zu - Differential - Verstärker (22), der so konfiguriert ist, dass er seinen Differentialeingang, der mit dem Ausgang des zweiten Mischers (21) zugeordnet ist, in seinen Differentialausgang verstärkt, und einen zweiten Differential - zu - Differential - Verstärker (22), der so konfiguriert ist, dass er seinen Differentialeingang, der dem Ausgang des dritten Mischers (21) zugeordnet ist, in seinen Differentialausgang verstärkt, wobei der Eingang des ersten Bildunterdrückungsfilters (23) dem Differentialausgang des ersten Differential - zu - Differential - Verstärkers (22) zugeordnet ist und der Eingang des zweiten Bildunterdrückungsfilters (23) dem Differentialausgang des zweiten Differential - zu - Differential - Verstärkers (22) zugeordnet ist, wobei der erste Differential - zu - Differential - Verstärker (22) in den ersten einzelnen integrierten Schaltkreis - (IC) - Chip (28) integriert ist und der zweite Differential - zu - Differential - Verstärker (22) in den zweiten einzelnen integrierten Schaltkreis - (IC) - Chip (28) integriert ist.

13. Signalempfänger nach Anspruch 1, bei welchem der erste und der zweite einzelne integrierte Schaltkreis - (IC) - Chip (28) so konfiguriert sind, dass sie in eine Außeneinheit (1) gesetzt werden, wobei der erste Eingang des ersten Mischers (15) mit einem von einer Antennenschüssel reflektierten Satellitensignal verbunden ist.

14. Einzelner integrierter Schaltkreis - (IC) - Chip (28) umfassend
eine Schaltmatrix (18), die so konfiguriert ist, dass sie ihren ersten Eingang in einen ersten Ausgang schaltet und ihren zweiten Eingang in einen zweiten Ausgang schaltet,
einen ersten Synthesizer (20), der so konfiguriert ist, dass er einen oszillierenden Ausgang erzeugt,
einen ersten Mischer (21), der so konfiguriert ist, dass er seinen ersten Eingang, der mit dem ersten Ausgang der Schaltmatrix (18) verbunden ist, mit seinem zweiten Eingang, der mit dem oszillierenden Ausgang des ersten Synthesizers (20) verbunden ist, zu einem Ausgang mischt,
einen zweiten Synthesizer (20), der so konfiguriert ist, dass er einen oszillierenden Ausgang erzeugt,
einen zweiten Mischer (21), der so konfiguriert ist, dass er seinen ersten Eingang, der mit dem zweiten Ausgang der Schaltmatrix (18) verbunden ist, mit seinem zweiten Eingang, der mit dem oszillierenden Ausgang des zweiten Synthesizers (20) verbunden ist, zu einem Ausgang mischt,
ein erster Filter (23), der so konfiguriert ist, dass er eine Komponente seines Eingangs, die mit dem Ausgang des ersten Mischers (21) verbunden ist, in einem Ausgang unterdrückt, und
ein zweiter Filter (23), der so konfiguriert ist, dass er eine Komponente seines Eingangs, die mit dem Ausgang des zweiten Mischers (21) verbunden ist, in einem Ausgang unterdrückt,
**dadurch gekennzeichnet, dass**
der einzelne integrierte Schaltkreis - (IC) - Chip (28) ferner umfasst:
einen dritten Synthesizer (24), der so konfiguriert ist, dass er einen oszillierenden Ausgang erzeugt,
einen dritten Mischer (25), der so konfiguriert ist, dass er seinen ersten Eingang, der mit dem Ausgang des ersten Filters (23) verbunden ist, mit seinem zweiten Eingang, der mit dem oszillierenden Ausgang des dritten Synthesizers (24) verbunden ist, zu einem Ausgang mischt,
einen vierten Synthesizer (24), der so konfiguriert ist, dass er ein oszillierendes Ausgangssignal erzeugt,
einen vierten Mischer (25), der so konfiguriert ist, dass er seinen ersten, dem Ausgang des zweiten Filters (23) zugeordneten Eingang mit seinem zweiten, dem oszillierenden Ausgang des vierten Synthesizers (24) zugeordneten Eingang zu einem Ausgang mischt, und
einen Kombinierer (26), der so konfiguriert ist, dass er seinen ersten Eingang, der dem Ausgang des dritten Mischers (25) zugeordnet ist, und seinen zweiten Eingang, der dem Ausgang des vierten Mischers (25) zugeordnet ist, zu einem Ausgang kombiniert, wobei die Schaltmatrix (18), der erste, zweite, dritte und vierte Synthesizer (20, 24), der erste, zweite, dritte und vierte Mischer (21, 25), der erste und zweite Filter (23) und der Kombinierer (26) in dem einzelnen integrierten Schaltkreis - (IC) - Chip (28) enthalten sind.

15. Einzelner integrierter Schaltkreis - (IC) - Chip (28) nach Anspruch 14, bei welchem der erste Filter (23) einen Bildunterdrückungsfilter (23) umfasst, der so konfiguriert ist, dass er eine Bildkomponente des Eingangs des ersten Filters im Ausgang des ersten Filters (23) unterdrückt.

16. Einzelner integrierter Schaltkreis - (IC) - Chip (28) nach Anspruch 14, der ferner umfasst: eine Optimierungseinheit (27), die so konfiguriert ist, dass sie das oszillierende Ausgangssignal des ersten Synthesizers (20) durch Addieren einer Frequenz einstellt und das oszillierende Ausgangssignal des dritten Synthesizers (24) durch Subtrahieren der Frequenz einstellt, wobei die Optimierungseinheit (27) in den einzelnen integrierten Schaltkreis - (IC) - Chip (28) integriert ist.

17. Einzelner integrierter Schaltkreis - (IC) - Chip (28) nach Anspruch 14, ferner umfassend einen ersten Eintakt - Differential - Verstärker (17), der so konfiguriert ist, dass er seinen Eintakteingang in einen Differentialausgang mit einer Phasendifferenz von im Wesentlichen 180 Grad verstärkt, einen zweiten Eintakt - Differential - Verstärker (17), der so konfiguriert ist, dass er seinen Eintakteingang in einen Differentialausgang mit einer Phasendifferenz von im Wesentlichen 180 Grad verstärkt, wobei der erste Eingang der Schaltmatrix (18) einen Differentialeingang umfasst, der dem Differentialausgang des ersten Eintakt - Differential - Verstärkers (17) zugeordnet ist, wobei der zweite Eingang der Schaltmatrix (18) einen Differentialeingang umfasst, der mit dem Differentialausgang des zweiten Eintakt - Differential - Verstärkers (17) verbunden ist, wobei der erste Ausgang der Schaltmatrix (18) einen Differentialausgang mit einer Phasendifferenz von im Wesentlichen 180 Grad umfasst, wobei der zweite Ausgang der Schaltmatrix (18) einen Differentialausgang mit einer Phasendifferenz von im Wesentlichen 180 Grad umfasst, einen ersten Differential - zu - Differential - Verstärker (19), der so konfiguriert ist, dass er seinen mit dem ersten Ausgang der Schaltmatrix (18) verbundenen Differentialeingang in seinen Differentialausgang verstärkt, und einen zweiten Differential - zu - Differential - Verstärker (19), der so konfiguriert ist, dass er seinen mit dem zweiten Ausgang der Schaltmatrix (18) verbundenen Differentialeingang in seinen Differentialausgang verstärkt, wobei der erste Eingang des ersten Mischers (21) mit dem Differentialausgang des ersten Differential - zu - Differential - Verstärkers (19) verbunden ist, wobei der erste Eingang des zweiten Mischers (21) mit dem Differentialausgang des zweiten Differential - zu - Differential - Verstärkers (19) verbunden ist, wobei der erste und der zweite Eintakt - Differential - Verstärker (17) und der erste und der zweite Differential - zu - Differential - Verstärker (19) in dem einzelnen integrierten Schaltkreis - (IC) - Chip (28) enthalten sind.

## Revendications

1. Récepteur de signaux comprenant
un premier synthétiseur (14) configuré pour générer une sortie oscillante,
un premier mélangeur (15) configuré pour mélanger sa première entrée avec sa seconde entrée associée à ladite sortie oscillante dudit premier synthétiseur (14) dans une sortie,
un premier séparateur (16) configuré pour séparer son entrée associée à ladite sortie dudit premier mélangeur (15) dans une première sortie et une seconde sortie,
une première matrice de commutation (18) configurée pour commuter sa première entrée associée à ladite première sortie dudit premier séparateur (16) dans une première sortie,
une seconde matrice de commutation (18) configurée pour commuter sa première entrée associée à ladite seconde sortie dudit premier mélangeur (16) dans une première sortie,
un deuxième synthétiseur (20) configuré pour générer une sortie oscillante,
un deuxième mélangeur (21) configuré pour mélanger sa première entrée associée à ladite première sortie de ladite première matrice de commutation (18) avec sa seconde entrée associée à ladite sortie oscillante dudit deuxième synthétiseur (20) dans une sortie,
un troisième synthétiseur (20) configuré pour générer une sortie oscillante, et
un troisième mélangeur (21) configuré pour mélanger sa première entrée associée à ladite première sortie de ladite seconde matrice de commutation (18) avec sa seconde entrée associée à ladite sortie oscillante dudit troisième synthétiseur (20) dans une sortie,
**caractérisé en ce que**
lesdits première matrice de commutation (18), deuxième synthétiseur (20) et deuxième mélangeur (21) sont incorporés dans une première pastille à circuit intégré (IC) unique (28), et lesdits seconde matrice de commutation (18), troisième synthétiseur (20) et troisième mélangeur (21) sont incorporés dans une seconde pastille à circuit intégré (IC) unique (28).

2. Récepteur de signaux selon la revendication 1 comprenant en outre un premier amplificateur asymétrique à différentiel (17) configuré pour amplifier son entrée asymétrique associée à ladite première sortie dudit premier séparateur (16) dans une sortie différentielle avec une différence de phase de sensiblement 180 degrés, un second amplificateur asymétrique à différentiel (17) configuré pour amplifier son entrée asymétrique associée à ladite seconde sortie dudit premier séparateur (16) dans une sortie différentielle avec une différence de phase de sensiblement 180 degrés, dans lequel ladite première entrée de ladite première matrice de commutation (18) comprend une entrée différentielle associée à ladite sortie différentielle dudit premier amplificateur asymétrique à différentiel (17), dans lequel ladite première entrée de ladite seconde matrice de commutation (18) comprend une entrée différentielle associée à ladite sortie différentielle dudit second amplificateur asymétrique à différentiel (17), dans lequel ladite première sortie de ladite première matrice de commutation (18) comprend une première sortie différentielle avec une différence de phase de sensiblement 180 degrés, dans lequel ladite première sortie de ladite seconde matrice de commutation (18) comprend une première sortie différentielle avec une différence de phase de sensiblement 180 degrés, dans lequel ladite première entrée dudit deuxième mélangeur (21) est associée à ladite première sortie différentielle de ladite première matrice de commutation (18), dans lequel ladite première entrée dudit troisième mélangeur (21) est associée à ladite première sortie différentielle de ladite seconde matrice de commutation (18), dans lequel ledit premier amplificateur asymétrique à différentiel (17) est incorporé dans ladite première pastille à circuit intégré (IC) unique (28) et ledit second amplificateur asymétrique à différentiel (17) est incorporé dans ladite seconde pastille à circuit intégré (IC) unique (28).

3. Récepteur de signaux selon la revendication 1 comprenant en outre un quatrième mélangeur (15) configuré pour mélanger sa première entrée avec sa seconde entrée associée à ladite sortie oscillante dudit premier synthétiseur (14) dans une sortie, un second séparateur (16) configuré pour séparer son entrée associée à ladite sortie dudit quatrième mélangeur (15) dans une première sortie et une seconde sortie, dans lequel ladite première matrice de commutation (18) est configurée pour commuter sa seconde entrée associée à ladite première sortie dudit second séparateur (16) dans une seconde sortie, dans lequel ladite seconde matrice de commutation (18) est configurée pour commuter sa seconde entrée associée à ladite seconde sortie dudit second séparateur (16) dans une seconde sortie, un quatrième synthétiseur (20) configuré pour générer une sortie oscillante, un cinquième mélangeur (21) configuré pour mélanger sa première entrée associée à ladite seconde sortie de ladite première matrice de commutation (18) avec sa seconde entrée associée à ladite sortie oscillante dudit quatrième synthétiseur (20) dans une sortie, un cinquième synthétiseur (20) configuré pour générer une sortie oscillante, un sixième mélangeur (21) configuré pour mélanger sa première entrée associée à ladite seconde sortie de ladite seconde matrice de commutation (18) avec sa seconde entrée associée à ladite sortie oscillante dudit cinquième synthétiseur (20) dans une sortie, un premier combineur (26) configuré pour combiner sa première entrée associée à ladite sortie dudit deuxième mélangeur (21) et sa seconde entrée associée à ladite sortie dudit cinquième mélangeur (21) dans une sortie et un deuxième combineur (26) configuré pour combiner sa première entrée associée à ladite sortie dudit troisième mélangeur (21) et sa seconde entrée associée à ladite sortie dudit sixième mélangeur (21) dans une sortie, dans lequel lesdits quatrième synthétiseur (20), cinquième mélangeur (21) et premier combineur (26) sont incorporés dans ladite première pastille à circuit intégré (IC) unique (28), et lesdits cinquième synthétiseur (20), sixième mélangeur (21) et deuxième combineur (26) sont incorporés dans ladite seconde pastille à circuit intégré (IC) unique (28).

4. Récepteur de signaux selon la revendication 3 comprenant en outre un premier filtre d'élimination d'image (23) configuré pour supprimer une composante d'image de son entrée associée à ladite sortie dudit deuxième mélangeur (21) dans une sortie, un deuxième filtre d'élimination d'image (23) configuré pour supprimer une composante d'image de son entrée associée à ladite sortie dudit troisième mélangeur (21) dans une sortie, un troisième filtre d'élimination d'image (23) configuré pour supprimer une composante d'image de son entrée associée à ladite sortie dudit cinquième mélangeur (21) dans une sortie, un quatrième filtre d'élimination d'image (23) configuré pour supprimer une composante d'image de son entrée associée à ladite sortie dudit sixième mélangeur (21) dans une sortie, un sixième synthétiseur (24) configuré pour générer une sortie oscillante, un septième mélangeur (25) configuré pour mélanger sa première entrée associée à ladite sortie dudit premier filtre d'élimination d'image (23) avec sa seconde entrée associée à ladite sortie oscillante dudit sixième synthétiseur (24) dans une sortie, un septième synthétiseur (24) configuré pour générer une sortie oscillante, un huitième mélangeur (25) configuré pour mélanger sa première entrée associée à ladite sortie dudit deuxième filtre d'élimination d'image (23) avec sa seconde entrée associée à ladite sortie oscillante dudit septième synthétiseur (24) dans une sortie, un huitième synthétiseur (24) configuré pour générer une sortie oscillante, un neuvième mélangeur (25) configuré pour mélanger sa première entrée associée à ladite sortie dudit troisième filtre d'élimination d'image (23) avec sa seconde entrée associée à ladite sortie oscillante dudit huitième synthétiseur (24) dans une sortie, un neuvième synthétiseur (24) configuré pour générer une sortie oscillante et un dixième mélangeur (25) configuré pour mélanger sa première entrée associée à ladite sortie dudit quatrième filtre d'élimination d'image (23) avec sa seconde entrée associée à ladite sortie oscillante dudit neuvième synthétiseur (24) dans une sortie, dans lequel ladite première entrée dudit premier combineur (26) est associée à ladite sortie dudit septième mélangeur (25) et ladite seconde entrée dudit premier combineur (26) est associée à ladite sortie dudit neuvième mélangeur (25), dans lequel ladite première entrée dudit deuxième combineur (26) est associée à ladite sortie dudit huitième mélangeur (25) et ladite seconde entrée dudit deuxième combineur (26) est associée à ladite sortie dudit dixième mélangeur (25), dans lequel lesdits sixième et huitième synthétiseurs (24) et septième et neuvième mélangeurs (25) sont incorporés dans ladite première pastille à circuit intégré (IC) unique (28), et lesdits septième et neuvième synthétiseurs (24) et huitième et dixième mélangeurs (25) sont incorporés dans ladite seconde pastille à circuit intégré (IC) unique (28).

5. Récepteur de signaux selon la revendication 1 comprenant en outre un premier amplificateur différentiel à différentiel (19) configuré pour amplifier son entrée différentielle associée à ladite première sortie de ladite première matrice de commutation (18) dans sa sortie différentielle et un second amplificateur différentiel à différentiel (19) configuré pour amplifier son entrée différentielle associée à ladite première sortie de ladite seconde matrice de commutation (18) dans sa sortie différentielle, dans lequel ladite première entrée dudit deuxième mélangeur (21) est associée à ladite sortie différentielle dudit premier amplificateur différentiel à différentiel (19), dans lequel ladite première entrée dudit troisième mélangeur (21) est associée à ladite sortie différentielle dudit second amplificateur différentiel à différentiel (19), dans lequel ledit premier amplificateur différentiel à différentiel (19) est incorporé dans ladite première pastille à circuit intégré (IC) unique (28), et ledit second amplificateur différentiel à différentiel (19) est incorporé dans ladite seconde pastille à circuit intégré (IC) unique (28).

6. Récepteur de signaux selon la revendication 1 comprenant en outre un premier amplificateur différentiel à différentiel (22) configuré pour amplifier son entrée différentielle associée à ladite sortie dudit deuxième mélangeur (21) dans sa sortie différentielle et un second amplificateur différentiel à différentiel (22) configuré pour amplifier son entrée différentielle associée à ladite sortie dudit troisième mélangeur (21) dans sa sortie différentielle, dans lequel ledit premier amplificateur différentiel à différentiel (22) est incorporé dans ladite première pastille à circuit intégré (IC) unique (28), et ledit second amplificateur différentiel à différentiel (22) est incorporé dans ladite seconde pastille à circuit intégré (IC) unique (28).

7. Récepteur de signaux selon la revendication 1 comprenant en outre un quatrième synthétiseur (14) configuré pour générer une sortie oscillante, un quatrième mélangeur (15) configuré pour mélanger sa première entrée avec sa seconde entrée associée à ladite sortie oscillante dudit quatrième synthétiseur (14) dans une sortie, un second séparateur (16) configuré pour séparer son entrée associée à ladite sortie dudit quatrième mélangeur (15) dans une première sortie et une seconde sortie, dans lequel ladite première matrice de commutation (18) est configurée pour commuter sa seconde entrée associée à ladite première sortie dudit second séparateur (16) dans une seconde sortie, dans lequel ladite seconde matrice de commutation (18) est configurée pour commuter sa seconde entrée associée à ladite seconde sortie dudit second séparateur (16) dans une seconde sortie, un cinquième synthétiseur (20) configuré pour générer une sortie oscillante, un cinquième mélangeur (21) configuré pour mélanger sa première entrée associée à ladite seconde sortie de ladite première matrice de commutation (18) avec sa seconde entrée associée à ladite sortie oscillante dudit cinquième synthétiseur (20) dans une sortie, un sixième synthétiseur (20) configuré pour générer une sortie oscillante, un sixième mélangeur (21) configuré pour mélanger sa première entrée associée à ladite seconde sortie de ladite seconde matrice de commutation (18) avec sa seconde entrée associée à ladite sortie oscillante dudit sixième synthétiseur (20) dans une sortie, un premier combineur (26) configuré pour combiner sa première entrée associée à ladite sortie dudit deuxième mélangeur (21) et sa seconde entrée associée à ladite sortie dudit cinquième mélangeur (21) dans une sortie et un deuxième combineur (26) configuré pour combiner sa première entrée associée à ladite sortie dudit troisième mélangeur (21) et sa seconde entrée associée à ladite sortie dudit sixième mélangeur (21) dans une sortie, dans lequel lesdits cinquième synthétiseur (20), cinquième mélangeur (21) et premier combineur (26) sont incorporés dans ladite premilère pastille à circuit intégré (IC) unique (28), et lesdits sixième synthétiseur (20), sixième mélangeur (21) et deuxième combineur (26) sont incorporés dans ladite seconde pastille à circuit intégré (IC) unique (28).

8. Récepteur de signaux selon la revendication 7 comprenant en outre un troisième combineur (29) configuré pour combiner sa première entrée associée à ladite sortie dudit premier combineur (26) et sa seconde entrée associée à ladite sortie dudit deuxième combineur (26) dans une sortie.

9. Récepteur de signaux selon la revendication 1 comprenant en outre un premier filtre d'élimination d'image (23) configuré pour supprimer une composante d'image de son entrée associée à ladite sortie dudit deuxième mélangeur (21) dans une sortie, un deuxième filtre d'élimination d'image (23) configuré pour supprimer une composante d'image de son entrée associée à ladite sortie dudit troisième mélangeur (21) dans une sortie, un quatrième synthétiseur (24) configuré pour générer une sortie oscillante, un quatrième mélangeur (25) configuré pour mélanger sa première entrée associée à ladite sortie dudit premier filtre d'élimination d'image (23) avec sa seconde entrée associée à ladite sortie oscillante dudit quatrième synthétiseur (24) dans une sortie, un cinquième synthétiseur (24) configuré pour générer une sortie oscillante, un cinquième mélangeur (25) configuré pour mélanger sa première entrée associée à ladite sortie dudit deuxième filtre d'élimination d'image (23) avec sa seconde entrée associée à ladite sortie oscillante dudit cinquième synthétiseur (24) dans une sortie, un premier combineur (26) configuré pour combiner sa première entrée associée à ladite sortie dudit quatrième mélangeur (25) et sa seconde entrée dans une sortie et un deuxième combineur (26) configuré pour combiner sa première entrée associée à ladite sortie dudit cinquième mélangeur (25) et sa seconde entrée dans une sortie, dans lequel lesdits quatrième synthétiseur (24), quatrième mélangeur (25), premier filtre d'élimination d'image (23) et premier combineur (26) sont incorporés dans ladite première pastille à circuit intégré (IC) unique (28), et lesdits cinquième synthétiseur (24), cinquième mélangeur (25), deuxième filtre d'élimination d'image (23) et deuxième combineur (26) sont incorporés dans ladite seconde pastille à circuit intégré (IC) unique (28).

10. Récepteur de signaux selon la revendication 9, dans lequel ladite sortie oscillante dudit quatrième synthétiseur (24) est configurée pour être ajustée sur la base d'informations contenant ladite sortie oscillante dudit deuxième synthétiseur (20).

11. Récepteur de signaux selon la revendication 9 comprenant en outre une unité d'optimisation (27) configurée pour ajuster ladite sortie oscillante dudit deuxième synthétiseur (20) avec une première fréquence et ajuster ladite sortie oscillante dudit quatrième synthétiseur (24) avec une seconde fréquence, dans lequel lesdites première et seconde fréquences présentent sensiblement le même niveau dans les directions opposées, dans lequel ladite unité d'optimisation (27) est incorporée dans ladite première pastille à circuit intégré (IC) unique (28).

12. Récepteur de signaux selon la revendication 9 comprenant en outre un premier amplificateur différentiel à différentiel (22) configuré pour amplifier son entrée différentielle associée à ladite sortie dudit deuxième mélangeur (21) dans sa sortie différentielle et un second amplificateur différentiel à différentiel (22) configuré pour amplifier son entrée différentielle associée à ladite sortie dudit troisième mélangeur (21) dans sa sortie différentielle, dans lequel ladite entrée dudit premier filtre d'élimination d'image (23) est associée à ladite sortie différentielle dudit premier amplificateur différentiel à différentiel (22), et ladite entrée dudit deuxième filtre d'élimination d'image (23) est associée à ladite sortie différentielle dudit second amplificateur différentiel à différentiel (22), dans lequel ledit premier amplificateur différentiel à différentiel (22) est incorporé dans ladite première pastille à circuit intégré (IC) unique (28), et ledit second amplificateur différentiel à différentiel (22) est incorporé dans ladite seconde pastille à circuit intégré (IC) unique (28).

13. Récepteur de signaux selon la revendication 1, dans lequel lesdites première et seconde pastilles à circuit intégré (IC) unique (28) sont configurées pour être installées dans une unité d'extérieur (1), dans lequel ladite première entrée dudit premier mélangeur (15) est associée à un signal satellite réfléchi par un réflecteur d'antenne.

14. Pastille à circuit intégré (IC) unique (28) comprenant
une matrice de commutation (18) configurée pour commuter sa première entrée dans une première sortie et commuter sa seconde entrée dans une seconde sortie,
un premier synthétiseur (20) configuré pour générer une sortie oscillante,
un premier mélangeur (21) configuré pour mélanger sa première entrée associée à ladite première sortie de ladite matrice de commutation (18) avec sa seconde entrée associée à ladite sortie oscillante dudit premier synthétiseur (20) dans une sortie,
un deuxième synthétiseur (20) configuré pour générer une sortie oscillante,
un deuxième mélangeur (21) configuré pour mélanger sa première entrée associée à ladite seconde sortie de ladite matrice de commutation (18) avec sa seconde entrée associée à ladite sortie oscillante dudit deuxième synthétiseur (20) dans une sortie,
un premier filtre (23) configuré pour supprimer une composante de son entrée associée à ladite sortie dudit premier mélangeur (21) dans une sortie, et
un deuxième filtre (23) configuré pour supprimer une composante de son entrée associée à ladite sortie dudit deuxième mélangeur (21) dans une sortie, **caractérisé en ce que**
ladite pastille à circuit intégré (IC) unique (28) comprend en outre :
un troisième synthétiseur (24) configuré pour générer une sortie oscillante ;
un troisième mélangeur (25) configuré pour mélanger sa première entrée associée à ladite sortie dudit premier filtre (23) avec sa seconde entrée associée à ladite sortie oscillante dudit troisième synthétiseur (24) dans une sortie ;
un quatrième synthétiseur (24) configuré pour générer une sortie oscillante ;
un quatrième mélangeur (25) configuré pour mélanger sa première entrée associée à ladite sortie dudit deuxième filtre (23) avec sa seconde entrée associée à ladite sortie oscillante dudit quatrième synthétiseur (24) dans une sortie ; et
un combineur (26) configuré pour combiner sa première entrée associée à ladite sortie dudit troisième mélangeur (25) et sa seconde entrée associée à ladite sortie dudit quatrième mélangeur (25) dans une sortie, dans lequel lesdits matrice de commutation (18), premier, deuxième, troisième et quatrième synthétiseurs (20, 24), premier, deuxième, troisième et quatrième mélangeurs (21, 25), premier et deuxième filtres (23) et combineur (26) sont incorporés dans ladite pastille à circuit intégré (IC) unique (28).

15. Pastille à circuit intégré (IC) unique (28) selon la revendication 14, dans lequel ledit premier filtre (23) comprend un filtre d'élimination d'image (23) configuré pour supprimer une composante d'image de ladite entrée dudit premier filtre dans ladite sortie dudit premier filtre (23).

16. Pastille à circuit intégré (IC) unique (28) selon la revendication 14 comprenant en outre une unité d'optimisation (27) configurée pour ajuster ladite sortie oscillante dudit premier synthétiseur (20) en ajoutant une fréquence et pour ajuster ladite sortie oscillante dudit troisième synthétiseur (24) en soustrayant ladite fréquence, dans lequel ladite unité d'optimisation (27) est incorporée dans ladite pastille à circuit intégré (IC) unique (28).

17. Pastille à circuit intégré (IC) unique (28) selon la revendication 14 comprenant en outre un premier amplificateur asymétrique à différentiel (17) configuré pour amplifier son entrée asymétrique dans une sortie différentielle avec une différence de phase de sensiblement 180 degrés, un second amplificateur asymétrique à différentiel (17) configuré pour amplifier son entrée asymétrique dans une sortie différentielle avec une différence de phase de sensiblement 180 degrés, dans lequel ladite première entrée de ladite matrice de commutation (18) comprend une entrée différentielle associée à ladite sortie différentielle dudit premier amplificateur asymétrique à différentiel (17), dans lequel ladite seconde entrée de ladite matrice de commutation (18) comprend une entrée différentielle associée à ladite sortie différentielle dudit second amplificateur asymétrique à différentiel (17), dans lequel ladite première sortie de ladite matrice de commutation (18) comprend une sortie différentielle avec une différence de phase de sensiblement 180 degrés, dans lequel ladite seconde sortie de ladite matrice de commutation (18) comprend une sortie différentielle avec une différence de phase de sensiblement 180 degrés, un premier amplificateur différentiel à différentiel (19) configuré pour amplifier son entrée différentielle associée à ladite première sortie de ladite matrice de commutation (18) dans sa sortie différentielle et un second amplificateur différentiel à différentiel (19) configuré pour amplifier son entrée différentielle associée à ladite seconde sortie de ladite matrice de commutation (18) dans sa sortie différentielle, dans lequel ladite première entrée dudit premier mélangeur (21) est associée à ladite sortie différentielle dudit premier amplificateur différentiel à différentiel (19), dans lequel ladite première entrée dudit deuxième mélangeur (21) est associée à ladite sortie différentielle dudit second amplificateur différentiel à différentiel (19), dans lequel lesdits premier et second amplificateurs asymétriques à différentiels (17) et premier et second amplificateurs différentiels à différentiels (19) sont incorporés dans ladite pastille à circuit intégré (IC) unique (28).
